# EUROPEAN PATENT APPLICATION

(11) **EP 4 439 890 A1**
(43) Date of publication of application: **02.10.2024**
(21) Application number: 23203969.3
(22) Date of filing: 17.10.2023
(51) Int. Cl.: H02G 11/00, B60L 53/31

(54) **CHARGER**

(30) Priority: 27.03.2023 KR 20230039937; 08.08.2023 KR 20230103549
(71) Applicant: LG Electronics Inc., Yeongdeungpo-gu Seoul 07336 (KR)
(72) Inventor: SHIN, Jongyeon, 06772 Seoul (KR); KIM, Jintae, 06772 Seoul (KR); SHIM, Jeongwon, 06772 Seoul (KR)
(74) Representative: Vossius & Partner Patentanwälte Rechtsanwälte mbB

(57) **Abstract**

The charger comprises a cable cover disposed on a main body to which a charging cable is connected and having an inner space therein; a cable guide movably accommodated in the inner space and including a bracket and at least one pulley rotatably installed on the bracket; and a damper connected to the bracket.

## Description

The present invention relates to a charger.

A charger is a device used to charge a storage battery.

An example of the charger may be an electric vehicle charger that charges a vehicle such as an electric vehicle, and electrical energy is supplied to a battery of the electric vehicle by connecting a charging connector provided at an end of a charging cable to a connection inlet installed in the electric vehicle.

In order to use the charging cable, the charging cable can be used after unwinding a coiled charging cable and withdrawing the charging cable. Due to a length of a pulled-out charging cable, a portion of a middle portion may touch a floor, and the portion touching the floor may be damaged by repeated use such as being worn out or contaminated by contaminants on the floor.

An example of a charger for an electric vehicle is an electric vehicle quick charger having a cable automatic alignment function disclosed in Korean Registered Patent Publication No. 10-2101479 B1 (May 26, 2020, published), and the electric vehicle quick charger having a cable automatic alignment function is a rapid charger that supplies charging power by connecting a charging cable, and comprises a cable alignment unit provided on a charger body and withdrawing and returning the charging cable, a sensor unit detecting charging using the charging cable or charging termination, and a control unit for controlling driving of the cable aligning unit to withdraw the charging cable when charging is detected by the sensor unit, and controlling driving of the cable aligning unit to return the charging cable when charging termination is detected by the sensor unit, the cable alignment unit comprises a driving roller and a pressure roller disposed at a predetermined interval from the driving roller, a driving module for rotating the roller is connected to the driving roller, the driving module may be a motor, and the pressure roller is connected with a pressure module which presses the roller, and the pressure module may be an elastic spring.

An example of a battery charging device capable of charging a battery is a battery charging device disclosed in Korean Patent Publication No. 10-2010-0108592A (October 7, 2010, published), and the battery charging device comprises a conduit portion configured to receive an outgoing transmission cable; a transmission cable connectable to a current source; and a transmission cable drive mechanism configured to draw the transmission cable into the conduit portion, wherein the transmission cable drive mechanism comprises a traction wire and a drive pulley, and comprises a first wheel facing a second wheel, wherein at least one of the first wheel and the second wheel is a driving wheel and at least one of the first wheel and the second wheel is coupled to the transmission cable and is configured to be retractable, and the transmission cable driving mechanism comprises a minor guiding pulleys, a major looping pulley, a lower pulley disposed under the main looping pulley to receive gravity, and a mass enhancement provided on the lower pulley, wherein a bi-directional rotational drive may be applied to at least one of the sub-guiding pulley and the main looping pulley, the lower pulley may be disposed in a guide channel, the mass enhancement such as a suspended weight, may be further augmented or replaced by an elastic element, such as a spring that is tensioned by being pulled down on a lower pulley.

An object of the present embodiment is to provide a charger capable of concealing a charging cable as much as possible and easily restoring the charging cable.

The charger according to the present embodiment comprises a cable cover disposed on a main body to which a charging cable is connected and having an inner space therein; a cable guide movably accommodated in the inner space and comprising a bracket and at least one pulley rotatably installed on the bracket; and a damper connected to the bracket.

A guide rail for guiding elevation of the cable guide may be disposed on the main body or the cable cover.

A stopper may be provided on the guide rail and the bracket may be caught on the stopper.

A damping spring may be provided on at least one of the guide rail or the bracket

A ball spring may be disposed on the bracket, and at least one of grooves may be formed on the guide rail to hold the ball spring.

The pully may comprise an upper pulley rotatably disposed on the bracket; and a lower pulley rotatably disposed on the bracket and having a lower height than a height of the upper pulley.

An outer diameter of the upper pulley may be smaller than an outer diameter of the lower pulley.

A recessed portion accommodating a portion of the charging cable may be formed on an outer circumferential surface of the pulley.

A curvature of the outer surface of the charging cable and a curvature of the recess portion may be the same.

The damper may comprise a gas spring.

The gas spring may comprise a piston rod provided with a rod mount on one end of which the bracket is mounted; and a body accommodating a gas and in which the piston rod is raised or lowered.

The body may comprise a body mounter mounted on one of the main body and the cable cover.

The gas spring may comprise a ball spring disposed on any one of the piston rod and the body, at least one grooves may be formed in the other of the piston rod and the body to hold the ball spring.

An example of the damper may comprise an upper gas spring provided with a rod mount to which the bracket is mounted at a lower end of the rod mount.

Another example of a damper may comprise a lower gas spring provided with a rod mount to which the bracket is mounted at an upper end of the rod mount.

The other example of a damper may comprise a damping spring connected to the gasket.

The charger may further comprise an arm body disposed on the upper portion of the main body and having an arm space formed therein, and an arm rail through which the charging cable is guided is formed on the arm body.

A width of the arm body in the front and rear direction may be longer than a width of the main body in the front and rear direction.

The arm rail may be formed on a lower plate of the arm body.

The arm rail may have a forward convex arc shape.

A pair of arm guides inclined in the arm space and guiding a charging cable'

A distance between lower ends of the pair of arm guides may be shorter than a distance between upper ends of the pair of arm guides.

The pair of arm guides may comprise a rear guide; and a front guide located in front of the rear guide.

### BRIEF DESCRIPTION OF THE DRAWINGS

FIG. 1 is a perspective view of a charger according to this embodiment;
FIG. 2 is a side view of a charger according to this embodiment;
FIG. 3 is a rear view of the charger according to the present embodiment;
FIG. 4 is a side view in which the cable cover according to the present embodiment is separated;
FIG. 5 is a rear view in which the cable cover according to the present embodiment is separated;
FIG. 6 is a plan view showing the inside of the arm body according to the present embodiment;
FIG. 7 is a side view showing a cable guide and a guide rail according to this embodiment;
FIG. 8 is a side view showing a modified example of a cable guide according to this embodiment;
FIG. 9 is a cross-sectional view showing a bracket and a guide rail according to this embodiment;
FIG. 10 is a side view showing a gas spring according to this embodiment;
FIG. 11 is a cross-sectional view of a gas spring according to this embodiment;
FIG. 12 is a schematic diagram of a first example of a damper according to this embodiment;
FIG. 13 is a schematic diagram of a second example of a damper according to this embodiment;
FIG. 14 is a schematic diagram of a third example of a damper according to this embodiment;
FIG. 15 is a diagram when the charger according to the present embodiment charges an electric vehicle;
FIG. 16 is a cross-sectional view of an arm guide according to the present embodiment.
FIG. 17 is a perspective view of a plurality of charging cables connected to the charger shown in FIG. 1;
FIG. 18 is a view showing the rear side of the main body shown in FIG. 17;
FIG. 19 is a perspective view of a first modified example of the charger shown in FIG. 17;
FIG. 20 is a view showing the rear of the charger shown in FIG. 19;
FIG. 21 is a perspective view of a second modified example of the charger shown in FIG. 17;
FIG. 22 is a perspective view of a third modified example of the charger shown in FIG. 17;
FIG. 23 is a view showing the rear of the charger shown in FIG. 22;
FIG. 24 is a perspective view of a fourth modified example of the charger shown in FIG. 17;
FIG. 25 is a view showing the rear side of the charger shown in FIG. 24;
FIG. 26 is a perspective view of a fifth modified example of the charger shown in FIG. 17;
FIG. 27 is a diagram showing another example of a charger according to this embodiment;
FIG. 28 is a perspective view showing another example of a charger according to this embodiment;
FIG. 29 is a side view showing the side of another example of the charger according to the present embodiment;
FIG. 30 is a rear view showing the rear of another example of a charger according to this embodiment;
FIG. 31 is a diagram showing the other example of a charger according to this embodiment;
FIG. 32 is a diagram showing an example of an arm guide rail according to the present embodiment;
FIG. 33 is a diagram showing an example of an arm guide according to the present embodiment.
FIG. 34 is a view showing another example of an arm guide rail according to the present embodiment;
FIG. 35 is a view showing a roller disposed on the arm body according to the present embodiment;
FIG. 36 is a cross-sectional view showing a modified example of the arm body according to the present embodiment;
FIG. 37 is a bottom view showing a modified example of the arm body according to the present embodiment.

Hereinafter, detailed embodiments will be described in detail with reference to the accompanying drawings.

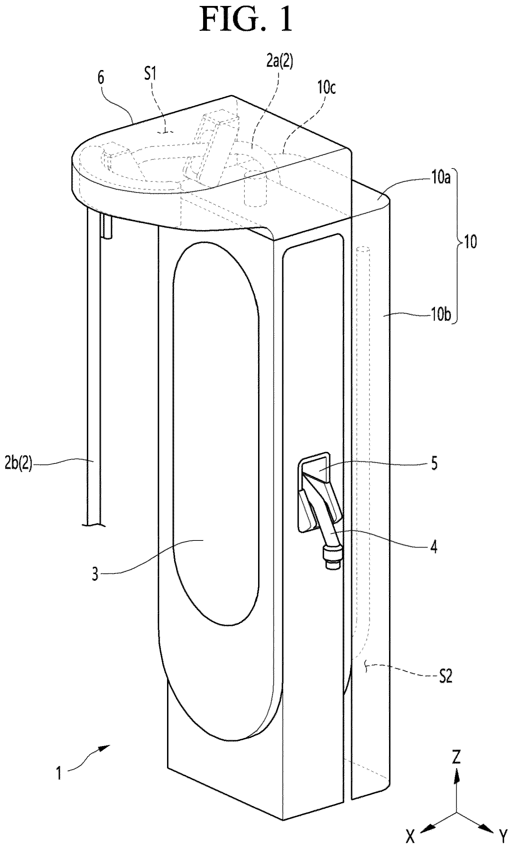

FIG. 1 is a perspective view of a charger according to this embodiment.

The charger may comprise a main body 1 and a charging cable 2.

The main body 1 may form an exterior of the charger. The main body 1 may comprise a housing forming an exterior. The main body 1 may transmit external power to the charging cable 2. A cable connector (not shown) to which the charging cable 2 is connected may be disposed in the main body 1.

The main body 1 may be provided with a screen 3 operated by a user. The screen 3 may be disposed on the front side of the main body 1.

The main body 1 may be provided with a connector holder 5 in which the connector 4 is provided on the charging cable 2 is mounted. The connector holder 5 may be disposed on one of the left and right sides of the main body 1.

An arm body 6 may be disposed above the main body 1. The arm body 6 may be disposed above the main body 1 and may be disposed to protrude in a forward direction. The lower surface of the arm body 6 may face the front of the main body 1. The lower surface of the arm body 6 may face the front of the screen 3.

An arm space S1 may be formed inside the arm body 6. A portion of the charging cable 2 may be accommodated in the arm space.

The arm body 6 may cover a portion of the charging cable 2 located on the upper side of the main body 1, and the arm body 6 may be an upper cover protecting the charging cable 2.

The charging cable 2 is configured to transmit external power supplied to the charger to the electric vehicle, and one end of the charging cable 2 may be electrically connected to the power source through a cable connector (not shown) of the main body 1, and the other end of charging cable 2 may be provided with a connector 4 connected to the connection inlet of the electric vehicle.

The charging cable 2 may be drawn from the inside of the arm body 6 to the outside of the arm body 6.

The charger may be a fast charger for rapidly charging the electric vehicle or a slow charger for slowly charging the electric vehicle.

The charging cable 2 may comprise a charging line through which current may flow and an outer shell surrounding the charging line. The charging cable 2 may further comprise a communication line through which data is transmitted. The communication line may be arranged inside the outer shell. The charger can charge the electric vehicle through a charging line and communicate with the electric vehicle through a communication line.

The charging cable 2 may comprise a cooling channel or a cooling pipe through which cooling fluid may pass. Examples of cooling fluids may be air, water, refrigerants, and the like.

The charging cable 2 may be a cable capable of transmitting a current of 30 A or more. The diameter of the charging cable 2 may be 30 mm or more.

The charging cable 2 may comprise a concealed portion 2a accommodated inside the charger and an exposed portion 2b drawn out of the charger.

The length of the exposed portion 2b may vary depending on the location of the electric vehicle, and the charger may guide the concealed portion 2a so that the length of the exposed portion 2b may be 3m to 8m, and the exposed portion 2b may have a maximum withdrawal length of 8 m.

It is preferable that the tensile force of the charging cable 2 is 30 N or less. The arm body 6 may guide the charging cable 2 so that the maximum tensile force of the charging cable 2 is 30N.

The charger may further comprise a cable cover 10.

The cable cover 10 may be disposed on the main body 1 to which the charging cable 2 is connected. An inner space S2 may be formed inside the cable cover 10. The cable cover 10 may be disposed on one surface of the main body 1, and the inner space S2 may be formed between the one surface of the main body 1 and the cable cover 10. The cable cover 10 may cover the charging cable 2 from the outside of the main body 1. The cable cover 10 may cover a portion of the charging cable 2 located outside the main body 1. The cable cover 10 may be disposed on the rear surface of the main body 1. The cable cover 10 may be a rear cover protecting the charging cable 2. The cable cover 10 may be disposed on the side of the main body 1. The cable cover 10 may be a side cover that protects the charging cable 2.

The cable cover 10 may be disposed on the rear surface of the body 1, and the cable cover 10 may comprise a rear plate 10a, a left plate 10b, and a right plate 10c.

The housing of the body 1, the arm body 6, and the cable cover 10 may constitute a case of the charger.

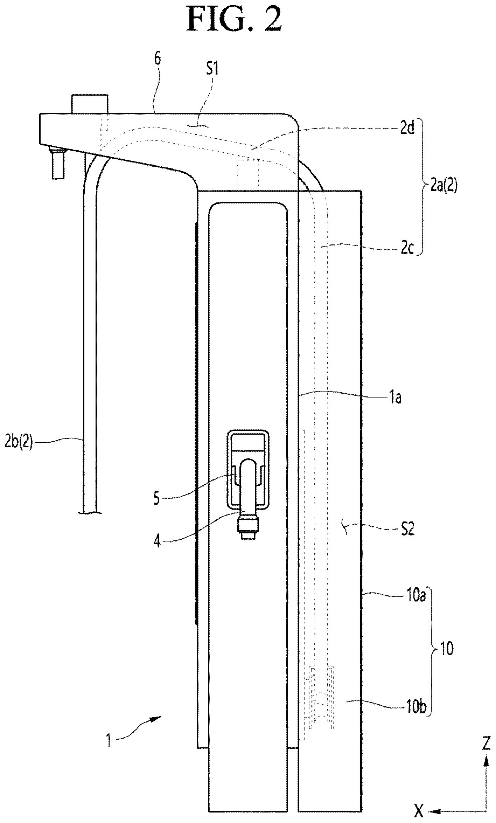

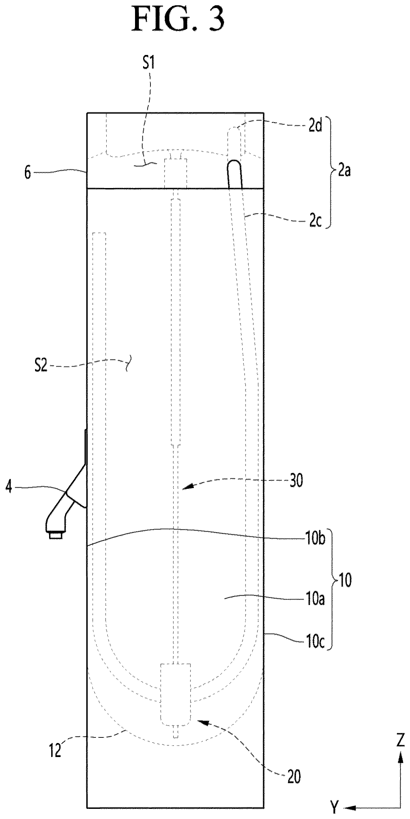

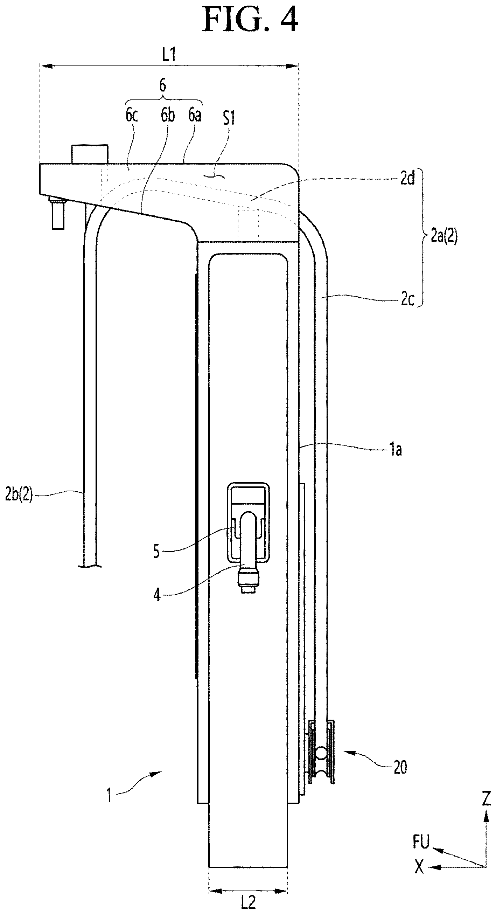

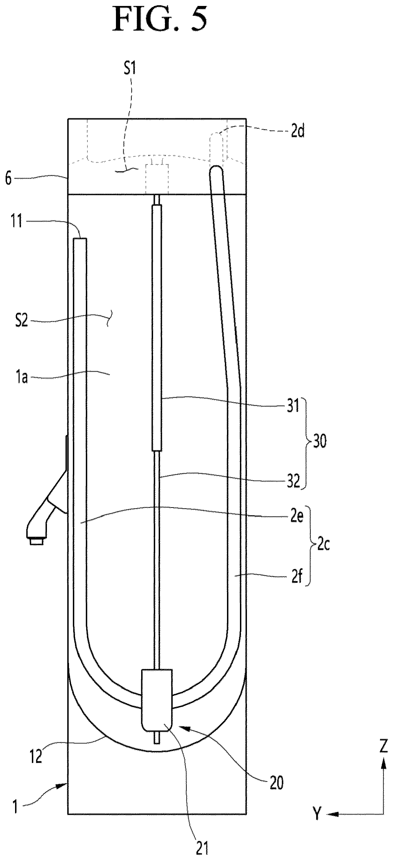

FIG. 2 is a side view of a charger according to this embodiment; FIG. 3 is a rear view of the charger according to the present embodiment; FIG. 4 is a side view in which the cable cover according to the present embodiment is separated; and FIG. 5 is a rear view in which the cable cover according to the present embodiment is separated;
An inner outlet 11 (refer to FIG. 5) may be formed in the main body 1. The charging cable 2 may extend to the outside of the main body 1 through the inner outlet 11. The inner outlet 11 may be an inner port through which the charging cable 2 is drawn out of the main body 1.

The inner outlet 11 may be formed closer to the top of the top and bottom of the main body 1.

The inner outlet 11 may be formed on a surface of the main body 1 facing the cable cover 10. The inner outlet 11 may be formed at a position that can be covered by the cable cover 10. The cable cover 10 may be a cover that hides the inner outlet 11 from being visible from the outside.

When the cable cover 10 is disposed on the rear surface of the body 1, the inner outlet 11 may be formed on the rear plate 1a of the main body 1. When the cable cover 10 is disposed on the side of the main body 1, the inner outlet 11 may be formed on the side plate of the main body 1.

As shown in FIG. 4, the arm body 6 may comprise an upper plate 6a, a lower plate 6b, and a border body 6c. The arm space S1 may be formed by the upper plate 6a, the lower plate 6b, and the border body 6c. The arm space S1 may be defined as a space surrounded by the upper plate 6a, the lower plate 6b, and the border body 6c.

The front-rear direction width L1 of the arm body 6 may be longer than the front-rear direction width L2 of the main body 1.

The upper plate 6a may be disposed above the border body 6c and may be horizontal.

The lower plate 6b may be disposed inclined at a predetermined angle. The lower plate 6b may be disposed obliquely toward the front upper side. The lower plate 6b may extend in the direction of the upper front side FU. The lower plate 6b may have an acute angle of inclination with the horizontal plane.

An arm body display may be disposed on the arm body 6. The arm body display may be disposed on at least one of the lower plate 6b and the border body 6c. A user may input a charging command through the arm body display. The user can check the charging information through the arm body display.

The charging cable 2 may extend into the inner space S2 through the inner outlet 11, extend from the inner space S2 to the arm space S1, and extend from the arm space S1 to the outside of the arm body (6).

One portion of the concealed portion 2a accommodated in the inner space S2 may be the inner cable 2c. The other portion of the concealed portion 2a accommodated in the arm space S1 may be an upper cable 2d.

The upper cable 2d may extend from the upper end of the inner cable 2c to the arm space S 1.

The upper cable 2d may be defined as a portion of the charging cable 2 accommodated in the arm space S1.

The charger may comprise a cable guide 20 and a damper 30.

As shown in FIG. 5, the inner cable 2c may be generally struck in a 'U' shape by the cable guide 2.

The inner cable 2c can be divided into an introduction portion 2e, an inverted portion 2f, and a guide portion 2h.

The introduction portion 2e may be a portion of the inner cable 2c between the inner outlet 11 and the cable guide 20.

The inverted portion 2f may be a portion after the cable guide 20 of the inner cable 2c.

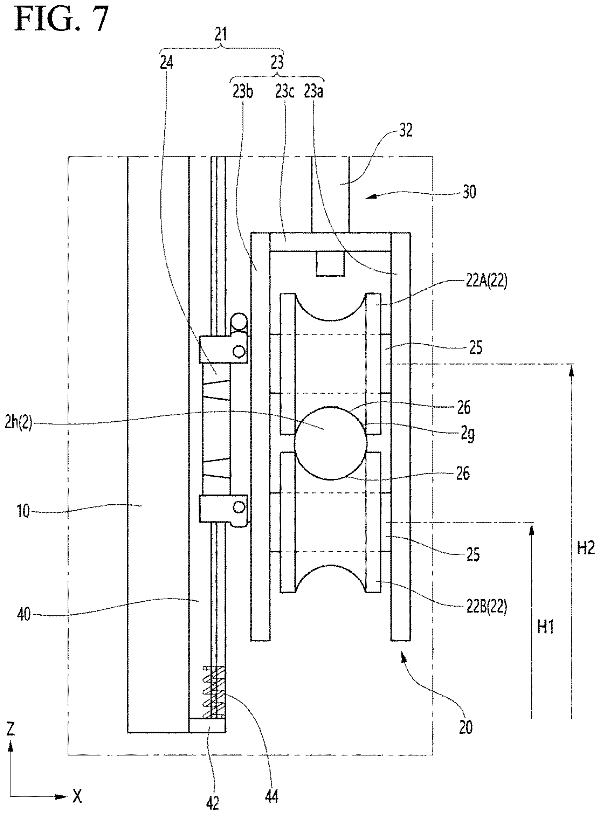

The guide portion 2h (refer to FIG. 7) may be a portion that comes into contact with the cable guide 20 and is guided by the cable guide 20.

The upper cable 2d may extend from an upper end of the inner cable 2c. The upper cable 2d may extend from an upper end of the inverted portion 2f.

The cable guide 20 may be movably accommodated in the inner space S2. The cable guide 20 may be movably disposed in the inner space S2. The cable guide 20 may guide the charging cable 2 while moving up and down by the charging cable 2, and may be a lifting guide.

As shown in FIG. 4, the cable guide 20 may be a pulley assembly including a bracket 21 and at least one pulley 22.

At least one pulley 22 may be rotatably installed on the bracket 21.

As shown in FIG. 5, the damper 30 may be connected to the bracket 21 and may restrict the cable guide 20 from moving rapidly. The damper 30 may be mounted on the main body 1 or the cable cover 40.

One example of the damper 30 may comprise a spring such as a coil spring, and the other example of the damper 30 may comprise a gas spring such as a compression gas spring or a tension gas spring. The damper 30 can be applied to any configuration capable of decelerating the bracket 21. Hereinafter, the charger will be described as the damper 30 including a gas spring.

The damper 30 may be disposed long in the vertical direction (Z) in the inner space (S2). The damper 30 may decelerate the cable guide 20 at the upper side of the cable guide 20.

The damper 30 may comprise a body 31 and a piston rod 32.

A space for accommodating gas may be formed in the body 31. The body 31 may be connected to one of the rear plate 1a of the main body 1, the back plate 10a of the cable cover 10, and the arm body 6.

The piston rod 32 may have a piston accommodated in a space of the body 31. The piston rod 32 may be connected to bracket 21. A lower end of the piston rod 32 may be connected to the bracket 21.

The cable guide 20 may be raised by the charging cable 2, and the cable guide 20 may be lowered by the weight of the cable guide 20 and the damping force of the damper 30.

The charger can guide the withdrawal of the charging cable 2 and can lead the charging cable 2 without a driving source such as a motor.

The charger may comprise a guide rail 40.

The guide rail 40 may guide the elevation of the cable guide 20. The guide rail 40 may be mounted on the main body 1 or the cable cover 40. The guide rail 40 may be disposed long in the vertical direction (Z) on the main body 1 or the cable cover 10.

FIG. 4 shows an example in which the guide rail 40 is disposed on the rear plate 1a of the main body 1, but the guide rail 40 is not limited to being disposed on the rear plate 1a of the main body 1, and the guide rail 40 may be disposed on the back plate 10a of the cover 10.

The charger may further comprise a lower cover (12, refer to FIG. 5) disposed inside the cable cover 10. The lower cover 12 may be disposed between the left plate portion 10b and the right plate portion 10c of the cable cover 10. The lower cover 12 may be formed in a convex shape toward the bottom of the charger.

The charger may comprise a spacer maintaining a distance between the charging cable 2 and the cable cover 10. The spacer may be a spacer disposed on the cable cover 10. The spacer may be disposed between the cable cover 10 and the charging cable 2, and may separate the outer surface of the charging cable 2 from the inner surface of the cable cover 10.

The charger may comprise a spacer maintaining a gap between the charging cable 2 and the arm body 6. The spacer may be a spacer disposed on the arm body 6. The spacer may be disposed between the arm body 6 and the charging cable 2, and may separate the outer surface of the charging cable 2 from the inner surface of the arm body 6.

The charger may comprise a spacer maintaining a distance between the introduction portion 2e and the inverted portion 2f. The spacer may be a spacer disposed on the main body 1 or the cable cover 10. The spacer may be disposed between the introduction portion 2e and the inverted portion 2f, and may space apart the introduction portion 2e and the inverted portion 2f from each other.

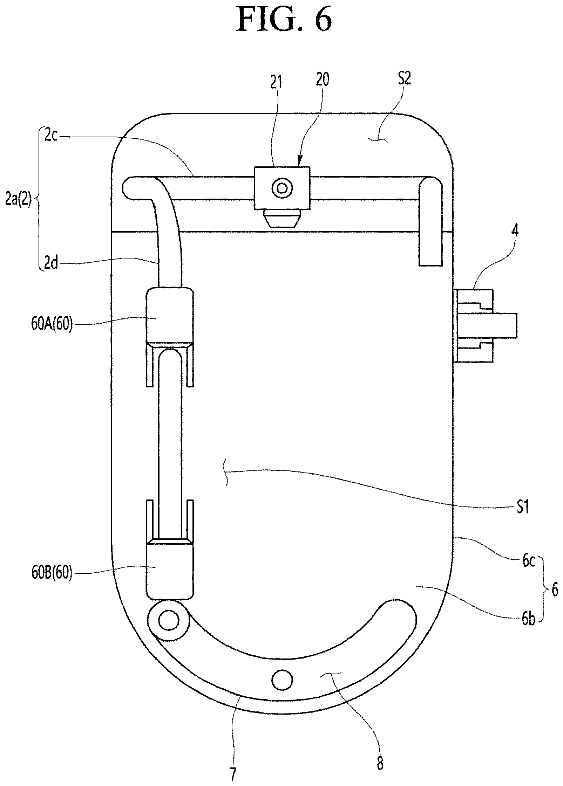

FIG. 6 is a plan view showing the inside of the arm body according to the present embodiment.

The charging cable 2 extending from the inner space S2 may be accommodated in the arm space S 1.

An arm rail 7 guiding the charging cable 2 may be formed on the arm body 6.

The arm rail 7 may be formed on the lower plate 6b of the arm body 6.

The arm rail 7 may have a forward convex arc shape.

An outlet 8 through which the charging cable 2 is taken out of the charger may be formed on the arm rail 7. The outlet 8 may be an outer port through which the charging cable 2 is pulled out of the charger.

The charging cable 2 may pass through the outlet 8 of the arm rail 7 of the arm body 6 and may be drawn out of the charger. The charging cable 2 can be guided along the arm rail 7. The charging cable 2 may be guided in the front-back direction (X) and the left-right direction (Y) by the arm rail 7.

The arm body 6 may be disposed on the upper portion of the main body 1 so as to be able to move up and down. An arm body rail for guiding the elevation of the arm body 6 may be provided in the main body 1, and the arm body 6 may be elevated along the arm body rail.

An extension body covering between the main body 1 and the arm body 6 may be formed in the upper portion of the main body 1 or the lower portion of the arm body 6, and the arm body 6, the extension body, and the main body 1 may be arranged in the order in the vertical direction.

FIG. 7 is a side view showing a cable guide and a guide rail according to this embodiment.

The bracket 21 may be an assembly of a plurality of members. The bracket 21 may comprise a bracket body 23 and a slider 24.

The bracket body 23 may comprise a front plate portion 23a, a rear plate portion 23b, and an upper plate portion 23c.

The front plate portion 23a and the rear plate portion 23b may be spaced apart in the front-back direction (X).

Each of the front plate portion 23a and the rear plate portion 23b can support the pulley 22 rotatably.

The upper plate portion 23c may connect the upper end of the front plate portion 23a and the upper end of the rear plate portion 23b.

A connection portion to which the piston rod 32 of the gas spring 30 is connected may be formed in the upper plate portion 23c.

The slider 24 may be fastened to one of the front plate portion 23a and the rear plate portion 23b of the bracket body 23. The slider 24 may be located outside the bracket body 23.

The pulley 22 may be rotated about a horizontal support shaft 25. The support shaft 25 may be horizontally disposed on the bracket body 23. The pulley 22 may be rotated clockwise or counterclockwise around the support shaft 25.

A recessed portion 26 in which a portion of the charging cable 2 is accommodated is formed on the outer circumferential surface of the pulley 22, and the curvature of the outer surface of the charging cable 2 and the curvature of the recessed portion 26 may be the same. The outer surface 2g of the charging cable 2 may be in surface contact with the recessed portion 26, and the charging cable 2 may be guided to the pulley 22 with high reliability.

A plurality of pulleys 22 may be provided to the bracket 21.

The plurality of pulleys may comprise an upper pulley 22A and a lower pulley 22B.

The charging cable 2 may comprise a guide portion 2h guided to the upper pulley 22A and the lower pulley 22B. The guide portion 2h may be a portion disposed between the upper pulley 22A and the lower pulley 22B of the charging cable 2.

The upper pulley 22A may be rotatably disposed on the bracket 21. The upper portion of the guide portion 2h may guide the upper pulley 22A.

When the charging cable 2 is pulled in from the outside, the upper pulley 22A may guide the guide portion 2h. When the charging cable 2 is pulled out, the upper pulley 22A can be pushed upward by the guide portion 2h.

The lower pulley 22B may be rotatably disposed on the bracket 21. The height H1 of the lower pulley 22B may be lower than the height H2 of the upper pulley 22A. A lower portion of the guide portions 2h may be guided the lower pulley 22B.

When the charging cable 2 is pulled in from the outside, the lower pulley 22B can be pushed downward by the guide portion 2h. When the charging cable 2 is pulled out, the lower pulley 22b can guide the guide portion 2h.

A stopper 42 on which the bracket 21 is hung may be provided on the guide rail 40.

A damping spring 44 may be provided on at least one of the guide rail 40 and the bracket 21.

The damping spring 44 can dampen the bracket 21 when the cable guide 20 reaches its upper limit position or lower limit position. An example of damping spring 44 may be a coil spring.

An example of the damping spring 44 may be mounted on the bracket 21, and when the cable guide 20 approaches the upper limit position or the lower limit position, it is supported in contact with the guide rail 40 or the stopper 42. and buffer the bracket 21.

Another example of the damping spring 44 may be mounted on the guide rail 40 or the stopper 42, and when the cable guide 20 approaches the upper limit position or the lower limit position, it is supported in contact with the bracket 21 and buffer the bracket 21.

The other example of the damping spring 44 is mounted on the bracket 21 and can be connected to the guide rail 40 or the stopper 42, and when the cable guide 20 approaches the upper limit position or the lower limit position, buffer the bracket 21.

The damping spring 44 may be a damper that decelerates the cable guide 20.

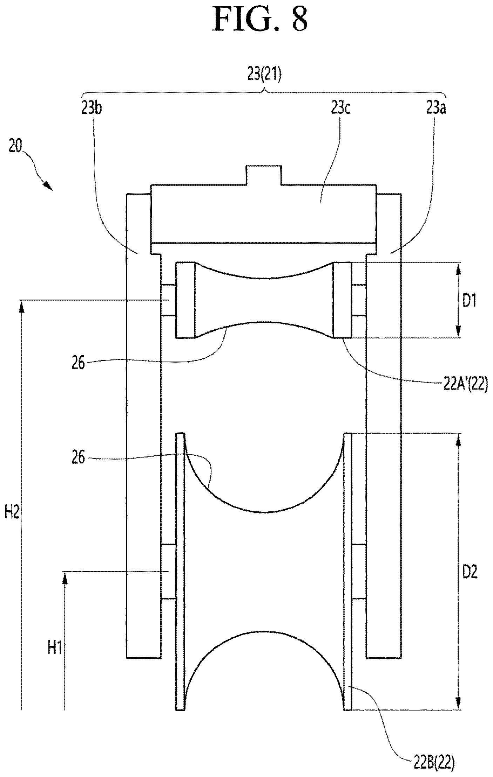

FIG. 8 is a side view showing a modified example of a cable guide according to this embodiment.

The outer diameter D 1 of the upper pulley 22A' may be smaller than the outer diameter D2 of the lower pulley 22B.

The curvature of the recessed portion 26 of the upper pulley 22A may be smaller than the outer curvature of the charging cable 2.

The curvature of the recessed portion 26 of the lower pulley 22B may be the same as the curvature of the outer surface of the charging cable 2 .

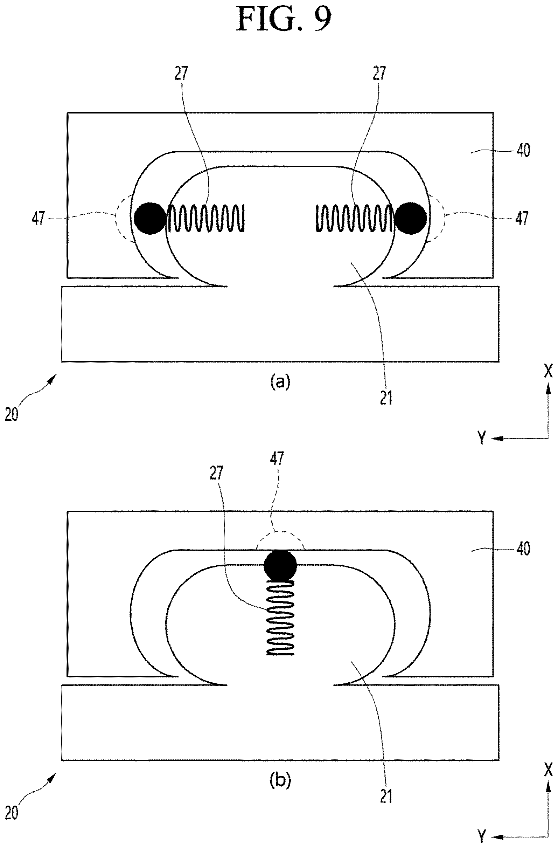

FIG. 9 is a cross-sectional view showing a bracket and a guide rail according to this embodiment;

The charger may comprise a locking mechanism.

The locking mechanism may lock/unlock the cable guide 20 to at least one of the guide rail 40, the cable cover 10, and the main body 1.

The bracket 21 of the cable guide 20 can be locked or unlocked to the guide rail 40. The bracket 21 to which no external force is applied may be locked and maintained by the guide rail 40 by a locking mechanism. When an external force is applied, the bracket 21 can be unlocked from the guide rail 40.

One example of a locking mechanism may comprise a ball spring 27.

A ball spring 27 may be disposed on the bracket 21, and a groove 47 may be formed in the guide rail 40 in which the ball spring 27 is inserted and caught.

The ball spring 27 may be a detent spring in which a detent ball is formed, the groove 47 may be a detent groove into which the detent ball is inserted, and the position of the cable guide 20 can be determined by the ball spring 27 and the groove 47.

When the ball of the ball spring 27 is inserted into the groove 47 and locked, the cable guide 20 does not arbitrarily move up and down, and can maintain its current position (That is, current height).

When an external force is applied to the charging cable 2, the external force can be transmitted to the cable guide 20, and the ball of the ball spring 27 can escape from the groove 47.

A plurality of grooves 47 may be formed in the guide rail 40. The plurality of grooves 47 may be spaced apart in the vertical direction Z of the guide rail 40.

The plurality of grooves 47 may comprise an upper limit groove, and when the cable guide 20 is in an upper limit position, the ball of the ball spring may be caught in the upper limit groove.

The plurality of grooves 47 may comprise the lower limit groove, and when the cable guide 20 is at the lower limit position, the ball of the ball spring may be caught in the lower limit groove.

The plurality of grooves 47 may comprise a center groove positioned between the upper limit groove and the lower limit groove. When the cable guide 20 is located at a specific position between the upper limit position and the lower limit position, the ball of the ball spring 27 can be caught in the center groove.

One example in which the ball springs 27 are disposed on both left and right sides of the bracket 21 and grooves 47 are recessed on both sides of the guide rail 40 is showed in (a) of FIG. 9.

The other example in which the ball spring 27 is disposed at the front or rear end of the bracket 21 and the groove 47 is recessed in the guide rail 40 is showed in (b) of FIG. 9.

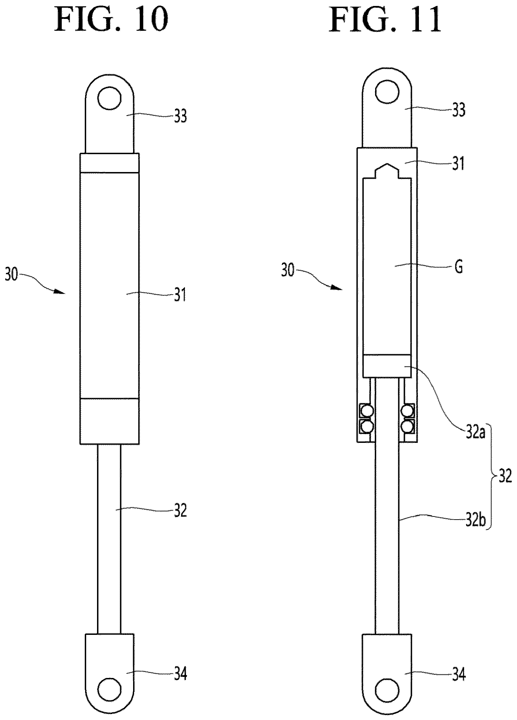

FIG. 10 is a side view showing a gas spring according to this embodiment; and FIG. 11 is a cross-sectional view of a gas spring according to this embodiment.

The damper 30 may comprise a gas spring.

The gas spring may comprise a body 31 and a piston rod 32.

A space in which gas G is accommodated may be formed inside the body 31. One example of the gas G accommodated inside the body 31 may be nitrogen gas (Nitrogen Gas).

The body 31 may comprise a body mounter 33. The body mounter 33 may be mounted on at least one of the main body 1, the arm body 6, and the cable cover 10.

The piston rod 32 may comprise a piston 32a accommodated in the space of the body 31 and a rod 32b protruding from the piston 32a.

One end of the piston rod 32 may be provided with a rod mount 34 to which the bracket 21 is mounted.

The piston 32a may be formed at one end of the rod 32b, and the rod mount 34 may be formed at the other end of the rod 32b.

The piston 32a may move up and down in the space of the body 31. The piston 32a can be raised in the space of the body 31 while the external force acts on the rod 32b and can compress the gas G.

When the external force is removed, the piston 32a may be pushed down by the compressed gas G, and the rod 32b may be moved down.

The gas spring may comprise a gas spring locking mechanism, and the gas spring locking mechanism may comprise a ball spring and a groove.

The ball spring may be disposed on any one of the body 31 and the piston rod 32.

The ball spring of the gas spring locking mechanism may have the same structure as the ball spring 27 (refer to FIG. 9) of the locking mechanism.

The groove may be formed on the other one of the body 31 and the piston rod 32, and the ball of the ball spring may be caught in the groove.

The groove of the gas spring locking mechanism may have the same structure as the groove (47, refer to FIG. 9) of the locking mechanism.

An example of the gas spring locking mechanism may comprise a ball spring disposed on the piston of the piston rod 32 and a groove formed on the body 31.

A plurality of grooves may be formed. A plurality of grooves may be formed in plurality in the longitudinal direction of the gas spring.

The plurality of grooves may comprise an upper limit groove, and when the cable guide 20 is in an upper limit position, the ball of the ball spring may be caught in the upper limit groove.

The plurality of grooves may comprise the lower limit groove, and when the cable guide 20 is at the lower limit position, the ball of the ball spring may be caught in the lower limit groove.

The plurality of grooves may comprise a center groove positioned between the upper limit groove and the lower limit groove. When the cable guide 20 is located at a specific position between the upper limit position and the lower limit position, the ball of the ball spring can be caught in the center groove.

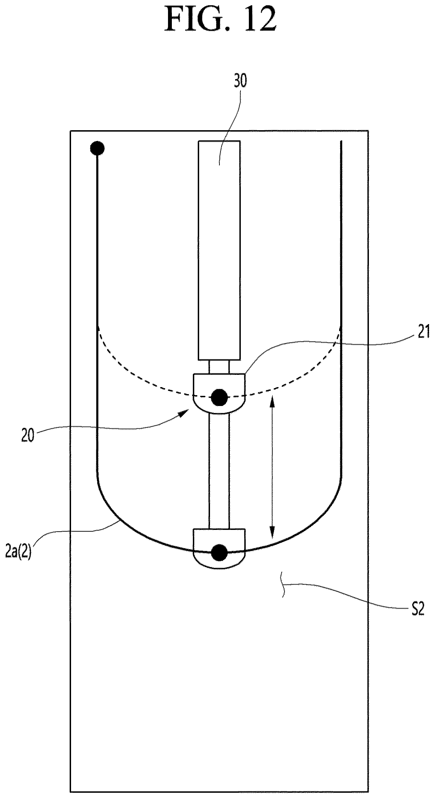

FIG. 12 is a schematic diagram of a first example of a damper according to this embodiment.

The damper 30 may comprise an upper gas spring.

An upper gas spring may be disposed above the cable guide 20.

A rod mount 34 to which the bracket 21 is mounted may be provided at the lower end of the upper gas spring.

An example of an upper gas spring may be a compression gas spring.

When an external force (pulling force) is applied to the cable 2, the cable guide 20 can be lifted by the cable 2 while guiding the cable 2.

When an external force (pulling force) is released from the cable 2, the cable guide 20 may be lowered by its own weight or by gas pressure.

The initial stroke value of the upper gas spring may be fixed and may be controlled through the guide rail 40.

When the piston rod 32 moves in the stroke range, the upper gas spring can be naturally damped by the gas pressure inside it.

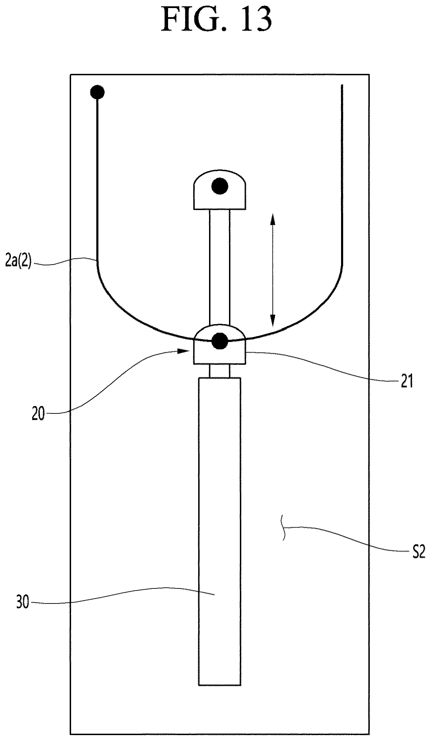

FIG. 13 is a schematic diagram of a second example of a damper according to this embodiment;
The damper 30 may comprise a lower gas spring.

A lower gas spring may be disposed below the cable guide 20.

A rod mount 34 to which the bracket 21 is mounted may be provided at an upper end of the lower gas spring.

An example of a lower gas spring may be a tension gas spring.

When an external force (pulling force) is applied to the cable 2, the cable guide 20 can be lifted by the cable 2 while guiding the cable 2.

When an external force (pulling force) is released from the cable 2, the cable guide 20 may be lowered by its own weight.

An initial stroke value of the lower gas spring may be fixed and may be controlled through the guide rail 40.

In the lower gas spring, the piston rod 32 may initially protrude as much as a set length, and may exert a damping function when restored.

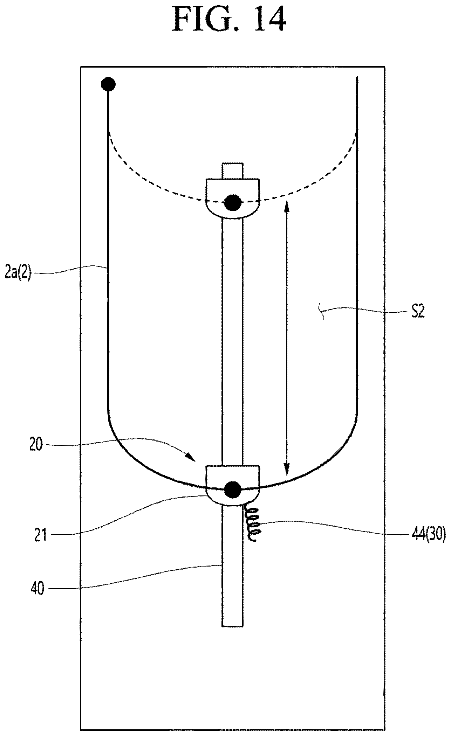

FIG. 14 is a schematic diagram of a third example of a damper according to this embodiment;
A third example of the damper may be a case that does not comprise a gas spring, and the bracket 21 and the pulley 22 may serve as weights.

When the external force (pulling force) applied to the charging cable 2 is removed, the cable guide 20 can descend by its own weight, and when the cable guide 20 descends, the length of the portion 2c accommodated in the inner space S2 can be increased.

The damper 30 may be disposed to minimize a sudden descent of the cable guide 20.

The damper 30 may comprise a damping spring 44 connected to the gasket 21. An example of damping spring 44 may be a coil spring.

The damping spring 44 may contact at least one of the main body 1, the cable cover 10, and the guide rail 40 or a separate stopper before the cable guide 20 reaches the lower limit position, and may decelerate the gasket 21 while being compressed.

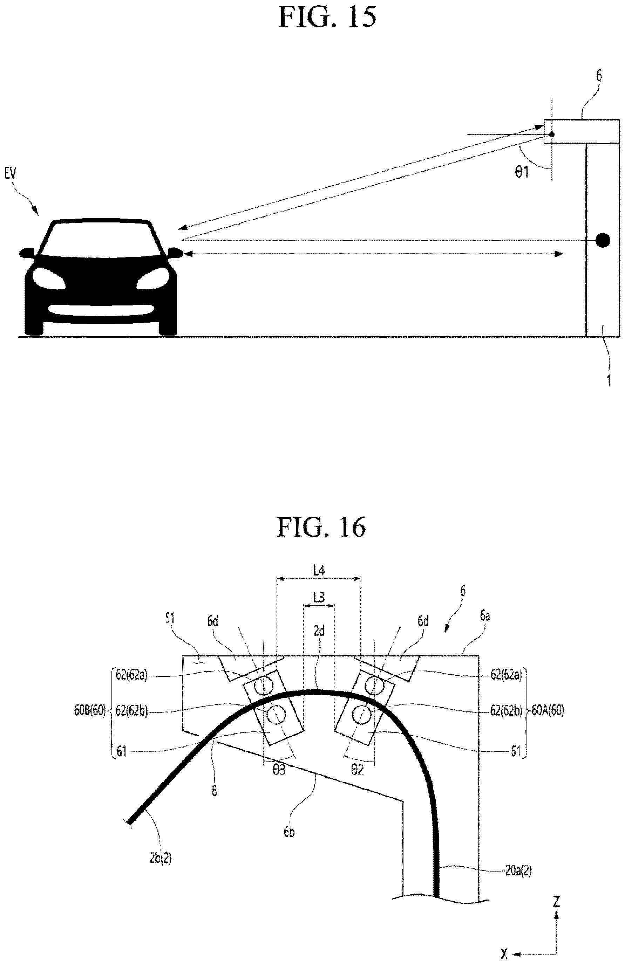

FIG. 15 is a diagram when the charger according to the present embodiment charges an electric vehicle; and FIG. 16 is a cross-sectional view of an arm guide according to the present embodiment.

As shown in FIG. 15, the electric vehicle (EV) can be charged at a location spaced apart from the charger, and the charging cable 2 extending to the electric vehicle (EV) is inclined at a maximum inclination angle θ1 with respect to the vertical line. The maximum inclination angle θ1 may be set in the range of 60° to 80°.

The charging cable 2 may preferably bent or curved at an angle of less than 90°, and the charger preferably guides the hidden portion 2a so that the hidden portion 2a is bent or curved at an angle of less than 90°.

The charger may comprise an arm guide 60 guiding the charging cable 2. The arm guide 60 may be disposed in the arm space S1. The arm guide 60 may be disposed inside the arm body 6 and may guide the charging cable 2 inside the arm body 6.

The arm guide 60 may guide the upper cable 2d of the charging cable 2, and the arm guide 60 may guide the upper cable 2d so as not to be bent at an angle of 90° or more.

The upper cable 2d may be bent or curved with a predetermined curvature by the arm guide 60.

The arm guide 60 may be disposed such that the upper cable 2d has at least one curvature.

The upper cable 2d can be bent or curved with one curvature in the arm space S1, and can be bent or curved with two or more curvatures in the arm space S 1.

The arm guide 60 may comprise an arm bracket 61 and an arm pulley 62.

The arm bracket 61 may be installed on at least one of the upper plate 6a and the lower plate 6b of the arm body 6.

A mounter 6d for mounting the arm guide 60 may be disposed on the upper plate 6a or the lower plate 6b of the arm body 6.

An upper end of the arm bracket 61 may be mounted below a mounter 6d installed below the upper plate 6a of the arm body 6.

The arm bracket 61 can be mounted obliquely by the mounter 6d. An inclined surface may be formed on the mounter 6d, and the arm body 6 may be mounted on the inclined surface.

When the charging cable 2 is pulled from the outside, the charging cable 2 may be pulled out of the arm space S1 at a pulling out angel (eg, 60° to 80°).

When the charging cable 2 is restored by its own weight, it may be lead into the arm space S 1 at an lead-in angle at which the charging cable 2 is drawn.

The pulling out angle of the charging cable 2 may be, for example, 60° to 80°, and the lead-in angle of the charge cable 2 may be flexible.

The pulling out angle and the lead-in angle of the charging cable 2 may be different, and the mounter 6d may be an auxiliary or compensator capable of correcting the pulling out angle and the lead-in angle of the charging cable 2 by the arm guide 60.

When the upper end of the arm bracket 61 is mounted on the upper plate 6a of the arm body 6, the lower end of the arm bracket 61 may be spaced apart from the lower plate 6b of the arm body 6 in the vertical direction (Z).

A pair of arm pulleys 62 may be provided to the arm bracket 61, and the pair of arm pulleys 62 may comprise an upper arm pulley 62a and a lower arm pulley 62b. The charging cable 2, in particular, the upper cable 2d may pass between the upper arm pulley 62a and the lower arm pulley 62b.

The upper arm pulley 62a may guide the upper cable 2d from the upper side of the upper cable 2d.

The lower arm pulley 62b may guide the upper cable 2d from the lower side of the upper cable 2d.

The shape and curvature of the upper cable 2d may be different according to the position of the arm guide 60, and the shape and curvature of the upper cable 2d may be different according to the number of arm guides 60.

When a plurality of arm guides 60 are disposed, the upper cable 2d may not be sharply bent and may extend with a curvature.

A pair of arm guides 60 may be provided to the arm body 6.

The pair of arm guides 60A and 60B allow the inner cable 2c to have one curvature based on the point(the first point or the upper cable start point) where the upper cable 2d are bent or curved from the inner cable 2c.

The pair of arm guides 60A and 60B may be approximately spaced apart in the front-rear direction (X).

The pair of arm guides 60A and 60B may be disposed so that the upper cables 2d may have two or more curvatures based on the first point.

Hereinafter, for convenience of description, the point located at the outlet 8 of the charging cable 2 may be referred to as a second point, and the point located between the pair of arm guides 60A and 60B of the charging cable 2 may be referred to as a third point.

The pair of arm guides 60A and 60B may be disposed so that the upper cable 2d has one curvature between the first point and the second point.

The pair of arm guides 60A and 60B may be disposed so that the upper cable 2d has a first curvature between a first point and a third point, a second curvature between the third point and the first point, and a first curvature and a second curvature are different.

At least one of the pair of arm guides 60A and 60B may be inclined in the arm space S 1.

The pair of arm guides 60A and 60B may be disposed gradually closer toward the lower side.

The distance L3 between the lower ends of the pair of arm guides 60A and 60B may be shorter than the distance L4 between the upper ends of the pair of arm guides 60 and 62.

In an example of the pair of arm guides 60A and 60B, only one of the pair of arm guides 60A and 60B may be inclined and the other may be vertically disposed.

In another example of the pair of arm guides 60A and 60B, each of the pair of arm guides 60A and 60B may be inclined.

The inclined arm guides 60A (60B) may be disposed inclined forward or backward at an angle of approximately 15° to 38° with respect to the vertical line.

The pair of arm guides 60A and 60B may comprise a rear guide 60A and a front guide 60B.

The rear guide 60A may be closer to the rear plate 1a of the main body 1 of the rear plate 1a of the main body 1 and the outlet 8 of the arm body 6.

The rear guide 60A may be disposed inclined forward with respect to a vertical line. The lower end of the rear guide 60A may be inclined forward and downward.

The rear guide 60A may be disposed at an angle Θ2 of approximately 15° to 38° with respect to the vertical line, corresponding to the inclined angel of the front guide 60B. The rear guide 60A may be disposed inclined at an angle of approximately 25° to the vertical line.

The front guide 60B may be closer to the outlet 8 of the arm beady 6 of the rear plate 1a of the main body 1 and the outlet 8 of the arm beady 6.

The front guide 60B may be located in front of the rear guide 60B.

The front guide 60B may be disposed inclined backward with respect to the vertical line. The lower end of the front guide 60B may be inclined rearward and downward.

The front guide 60B may be disposed at an angle Θ3 of approximately 15° to 38° with respect to the vertical line, based on the pulling out angle at which the charging cable 2 is pulled out. The front guide 60B may be disposed at an angle of approximately 25° to the vertical line.

The rear guide 60A and the front guide 60B may be disposed inclined at the same angle or inclined at different angles.

The rear guide 60A and the front guide 60B may be inclined at different angles Θ2 and Θ3 with respect to the vertical line.

The angle Θ2 at which the rear guide 60A is disposed may not be the same as the angle Θ3 at which the front guide 60B is disposed. An angle Θ2 at which the rear guide 60A may be greater or smaller than an angle Θ3 of the front guide 60B.

The charging cable 2 extending upward in the inner space S2 of the cable cover 10 is guided by the rear guide 60A, since the rear guide 60A is inclined in the forward direction, the charging cable 2 is not bent or curved abruptly, and the upper cable 2d can be pulled in the rear guide 60A.

The upper cable 2d may extend substantially in the front-back direction X in the arm space S 1. The upper cable 2d extending in the front-back direction (X) enters the front guide 60B, can be guided by the front guide 60B, and then can be taken out through the outlet 8 of the arm rail 7.

Since the front guide 60B is inclined rearward, the upper cable 2d is not bent or curved abruptly and can be pulled out through the outlet 8 while maintaining a straight shape as much as possible.

When the charging cable 2 is pulled out or lead in, the operating force is increased, and it is preferable that the friction area between the charging cable 2 and the arm pulley 62 be minimized.

In addition, the difference between the pulling out angle and the lead-in angle may be corrected by the mounter 6d, and the charging cable 2 may be bent or curved while maintaining a curvature within a set range.

The rear guide 60A close to the rear plate 1a of the body 1 and the front guide 60B close to the outlet 8 of the arm body 6 can maintain the curvature of the charging cable 2, and when the difference between the pulling out angle and the lead in angle is corrected by the mounter 6d, the operating force can be minimized, and even the disabled person can easily use the charging cable 2.

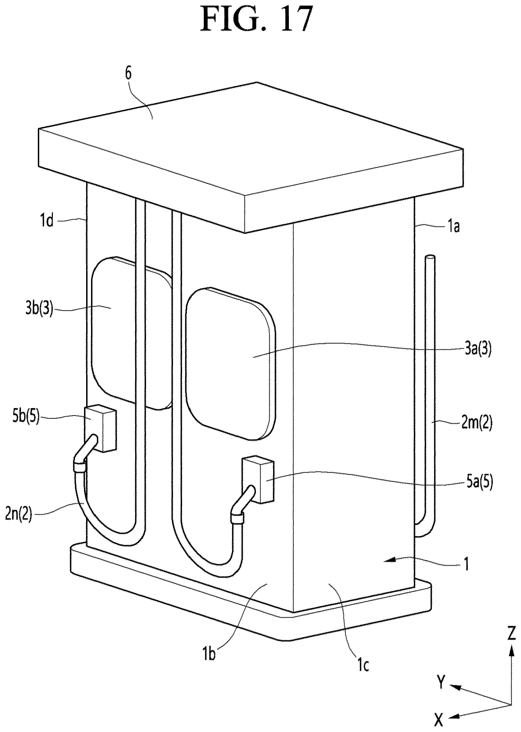

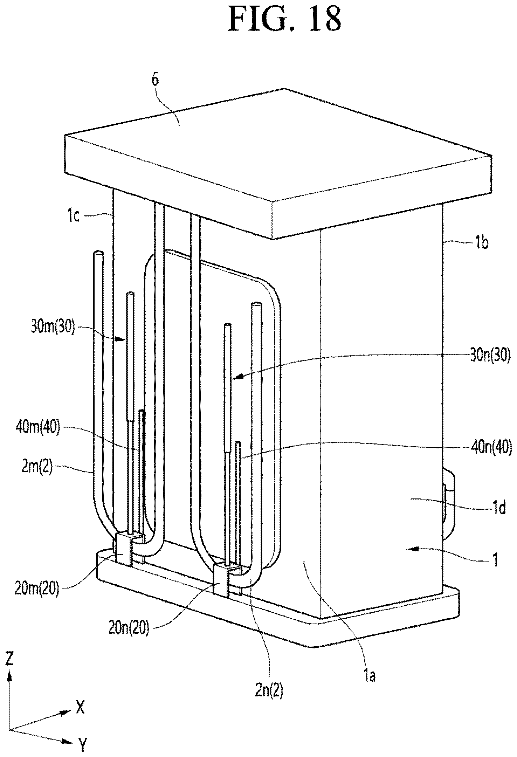

FIG. 17 is a perspective view of a plurality of charging cables connected to the charger shown in FIG. 1; and FIG. 18 is a view showing the rear side of the main body shown in FIG. 17;
The charger comprises a main body 1 to which a charging cable 2 is connected; a cable guide 20 guiding the charging cable 2; and a damper 30 connected to the cable guide 20.

The main body 1 may be the same as or similar to the main body 1 shown in FIG. 1, and the same reference numeral is used to avoid redundant description, and detailed descriptions thereof are omitted.

The main body 1 may comprise a back plate 1a, a front plate 1b, a left plate 1c and a right plate 1d.

As shown in FIGS. 17 and 18, the charger may comprise a plurality of charging cables 2. A plurality of charging cables 2 may be connected to the main body 1. A plurality of charging cables 2 may have the same configuration.

The cable guide 20 and the damper 30 may constitute an elevation guide module that guides the charging cable 2 in elevation.

When the charger comprises a plurality of charging cables 2, the charger may comprise a plurality of lifting guide modules, and a plurality of each of the cable guides 20 and dampers 30 may be provided in the charger.

That is, the charger may comprise a plurality of charging cables 2, a plurality of cable guides 20, and a plurality of dampers 30.

Each of the plurality of cable guides 20 may have the same configuration as the cable guide 20 shown in FIG. 5, and hereinafter, for convenience of description, it will be referred to as a plurality of cable guides 20 and described.

Each of the plurality of dampers 30 may have the same configuration as the damper 30 shown in FIG. 5. Hereinafter, for convenience of description, it will be referred to as a plurality of dampers 30 and described.

The charger shown in FIGS. 17 and 18 may comprise a pair of charging cables 2, a pair of cable guides 20 and a pair of dampers 30.

A pair of charging cables 2 may be divided into a left charging cable 2m and a right charging cable 2n.

Each of the left charging cable 2m and the right charging cable 2n may be connected to a cable connector provided in the main body 1.

One example of the body 1 is provided with one cable connector in the body 1, and it is possible that the left charging cable 2m and the right charging cable 2n are connected to one cable connector.

Another example of the main body 1 is that the main body 1 may be provided with a left cable connector to which the left charging cable 2m is connected and a right cable connector to which the right charging cable 2n is connected.

It is possible for each of the left charging cable 2m and the right charging cable 2n to extend from the main body 1 to the rear of the rear plate 1a of the main body 1.

One example of the main body 1 is that one inner outlet (11, refer to FIG. 5) can be formed on the rear plate 1a of the main body 1, and the left charging cable 2m and the right charging cable 2n are respectively may extend to the rear of the rear plate 1a of the main body 1 through one inner outlet 11.

In another example of the main body 1, a left inner outlet and a right inner outlet are formed on the rear plate 1a of the main body 1, respectively, the left charging cable 2m passes through the left inner outlet and can be extended to the rear of the back plate (1a) and the right charging cable 2n passes through the right inner outlet and can be extended to the rear of the back plate (1a) of the main body (1).

The left charging cable 2m and the right charging cable 2n may be biased in the left and right directions. The left charging cable 2m and the right charging cable 2n may be spaced apart in the left and right direction Y.

The left charging cable 2m may be located close to the left end of the left end and the right end of the back plate 1a, and may be guided in a substantially U-shape.

The right charging cable 2n may be located close to the right end of the left end and the right end of the back plate 1a, and may be guided in a substantially U-shape.

The pair of cable guides 20 may be divided into a left cable guide 20m and a right cable guide 20n.

The left cable guide 20m can be lifted up and down by the left charging cable 2m and can guide the left charging cable 2m.

The right cable guide 20n can be lifted up and down by the right charging cable 2n and can guide the right charging cable 2n.

The left cable guide 20m and the right cable guide 20n may be spaced apart in the left and right direction Y. The left cable guide 20m and the right cable guide 20n can be moved up and down independently of each other.

The pair of dampers 30 may be divided into a left damper 30m and a right damper 30n.

The left damper 30m may be connected to the left cable guide 20m, and may restrict the left cable guide 20m from being rapidly moved.

The right damper 30n may be connected to the right cable guide 20m, and may restrict the right cable guide 20n from being rapidly moved.

The left damper 30m and the right damper 30n may be spaced apart in the left and right direction Y. The left damper 30m and the right damper 30n may be operated independently of each other.

The charger may further comprise a guide rail 40 guiding the elevation of the cable guide 20.

A plurality of guide rails 40 may be provided in the charger. The charger may comprise a pair of guide rails 40.

The pair of guide rails 40 may comprise a left guide rail 40m and a right guide rail 40b.

The left guide rail 40m may guide the elevation of the left cable guide 20m.

The right guide rail 40n may guide the elevation of the right cable guide 20n.

The left guide rail 40m and the right guide rail 40b may be spaced apart in the left-right direction Y.

The charger may further comprise a cable cover covering the plurality of cable guides 20 , the plurality of dampers 30 , and the plurality of guide rails 40 .

The cable cover may be the same as or similar to the cable cover 10 shown in FIGS. 1 to 3, and is disposed on the rear plate 1a of the main body 1 to protect the plurality of cable guides 20 and the plurality of dampers 30.

The charger may further comprise an arm body 6 disposed above the main body 1.

An arm space accommodating at least one charging cable 2 may be formed inside the arm body 6, and an arm rail guiding the charging cable 2 may be formed in the arm body 6.

A plurality of arm rails may be formed on the arm body. A plurality of arm rails may be spaced apart. Any one of the plurality of arm rails may guide any one (2m) of the plurality of charging cable 2, and the other of the plurality of arm rails may guide the other (2n) of the plurality of charging cable 2.

A plurality of cable guides 20, a plurality of dampers 30, and a plurality of guide rails 40 may be disposed on the rear of the main body 1.

Here, the meaning that the plurality of cable guides 20, the plurality of dampers 30, and the plurality of guide rails 40 are disposed on the rear of the main body 1 means that the plurality of cable guides 20, the plurality of dampers 30, and the plurality of guide rail 40 are disposed behind the rear plate 1a of the main body 1.

When the charger further comprises a cable cover, the plurality of cables 20 may be moved between the rear plate 1a of the main body 1 and the cable cover.

A plurality of dampers 30 and a plurality of guide rails 40 may be installed on one side of the body 1 and the cable cover.

For example, the plurality of dampers 30 and the plurality of guide rails 40 may be mounted on a cable cover. As another example, the plurality of dampers 30 and the plurality of guide rails 40 may be mounted on the rear plate 1a of the body 1. As the other example, the plurality of dampers 30 are mounted on one of the rear plate 1a of the main body 1 and the cable cover, and the plurality of guide rails 40 are mounted on the other of the rear plate 1a of the main body 1 and the cable cover.

A plurality of charging cables 2 may extend from the rear of the main body 1 to the upper side of the main body 1.

An upper guide for guiding the charging cable 2 extending to the upper side of the body 1 may be disposed on the upper side of the main body 1. The upper guide may be located on the upper side of the main body 1 and can guide the charging cable 2 extending to the upper side of the main body 1.

The upper guide may be the same as or similar to the arm guide 60 shown in FIG. 16.

A plurality of upper guides are provided, and the plurality of upper guides may comprise a rear guide and a front guide for guiding the charging cable in front of the rear guide identical to or similar to the arm guide 60 shown in FIG. 16.

The upper guide may be mounted on the main body 1 or the arm body 6. When the upper guide is mounted on the arm body 6 and accommodated in the arm space of the arm body 60, the upper guide may be the same as the arm guide 60 shown in FIG. 16.

When the charger comprises a plurality of charging cables 2, the main body 1 may be provided with a plurality of screens 3. The plurality of screens 3 may comprise a left display 3a disposed on the left portion of the front plate 1b of the main body 1 and a right display 3b disposed on the right portion of front plate 1b of the main body 1.

When the charger comprises a plurality of charging cables 2, the main body 1 may be provided with a plurality of connectors 5. The plurality of connectors 5 may comprise a left connector 5a disposed on the left portion of the front plate 1b of the main body 1 and a right connector 5b disposed on the right portion of front plate 1b of the main body 1.

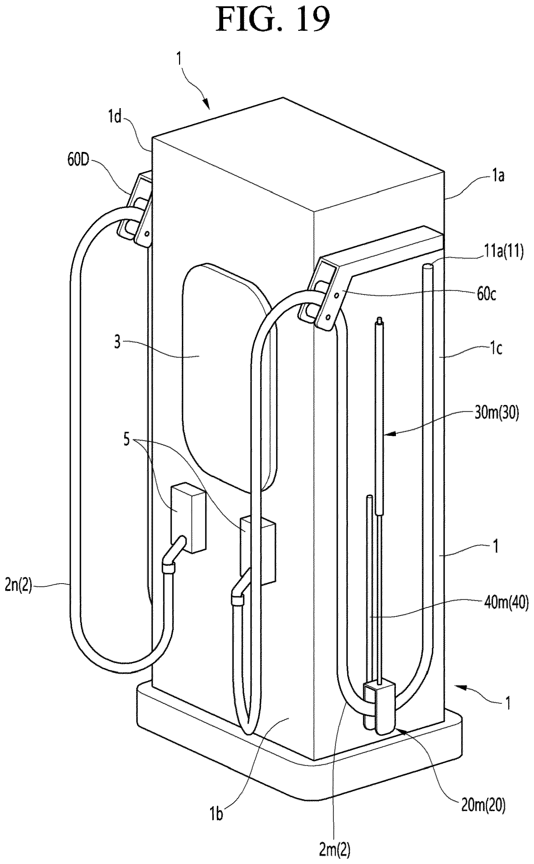

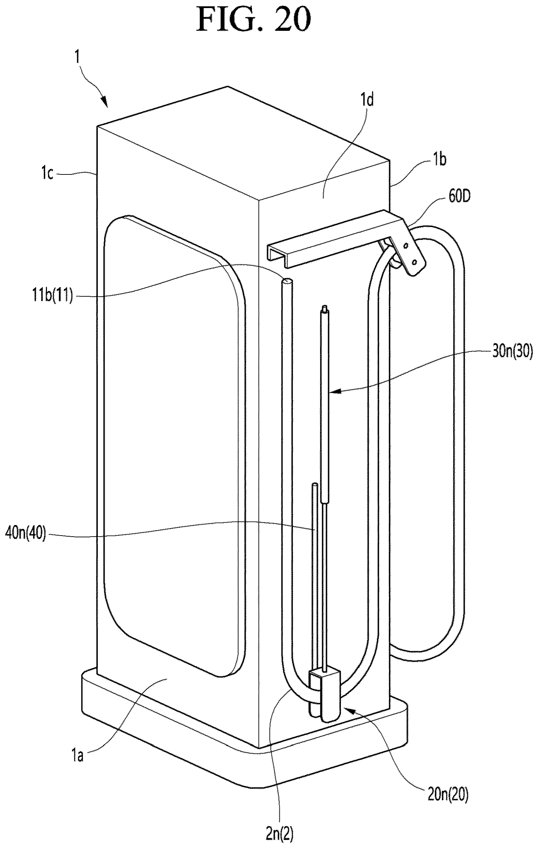

FIG. 19 is a perspective view of a first modified example of the charger shown in FIG. 17; and FIG. 20 is a view showing the rear of the charger shown in FIG. 19;
The first modified example of the charger shown in FIGS. 19 and 20 comprises a plurality of charging cables 2, a plurality of cable guides 20, a plurality of dampers 30, and a plurality of guide rails 40 like the charger shown in FIGS. 17 and 18.

In the first modified example of the charger shown in FIGS. 19 and 20, the positions of each of the plurality of charging cables 2, the plurality of cable guides 20, the plurality of dampers 30, and the plurality of guide rails 40 may be different from them of the chargers shown in FIGS. 17 and 18.

A plurality of charging cables 2, a plurality of cable guides 20, a plurality of dampers 30, and a plurality of guide rails 40 may be disposed on the side of the main body 1.

The plurality of cable guides 20, the plurality of dampers 30, and the plurality of guide rails 40 are arranged on the side of the main body 1 means that the plurality of cable guides 20, the plurality of dampers 30, and the plurality of guide rails 40 may be disposed next to the side surface of the main body (1).

A plurality of charging cables 2, a plurality of cable guides 20, a plurality of dampers 30, and a plurality of guide rails 40 may be distributedly disposed on the left side and right side of the main body 1.

The plurality of charging cables 2 may comprise a left charging cable 2m and a right charging cable 2n.

The left charging cable 2m may extend from the main body 1 to the left of the left surface of the main body 1. A left outlet 11a may be formed at an upper portion of the left plate 1c of the main body 1.

The right charging cable 2n may extend from the main body 1 to the right of the right surface of the main body 1. A right outlet 11b may be formed on the upper portion of the right plate 1d of the main body 1.

Each of the left charging cable 2m and the right charging cable 2n may extend from the side of the main body 1 to the front of the front plate 1b of the main body 1,

A left guide 60C for guiding and supporting the left charging cable 2m may be disposed above the left plate 1c of the main body 1.

A right guide 60D for guiding and supporting the right charging cable 2n may be disposed above the right plate 1d of the main body 1.

The left guide 60C and the right guide 60D may be closer to the front plate 1b of the main body 1 than to the rear plate 1a of the main body 1.

The left guide 60C and the right guide 60D may be similar to the arm guide 60 shown in FIG. 16, especially the rear guide 60A.

The plurality of cable guides 20 may comprise a left cable guide 20m disposed on the left side of the main body 1 and a right cable guide 20n disposed on the right side of the main body 1.

The left cable guide 20m is disposed on the left surface of the main body 1 so that it can be moved up and down by the left charging cable 2m, and can guide the left charging cable 2m.

The right cable guide 20n is disposed on the right surface of the main body 1 so that it can be moved up and down by the right charging cable 2n, and can guide the right charging cable 2n.

The plurality of dampers 30 may comprise a left damper 30m connected to the left cable guide 20m and a right damper 30n connected to the right cable guide 20n.

The left damper 30m is connected to the left cable guide 20m to limit rapid elevation of the left cable guide 20m.

The right damper 30n may be connected to the right cable guide 20n to limit rapid elevation of the right cable guide 20n.

The plurality of guide rails 40 may comprise a left guide rail 40m disposed on the left side of the body 1 and a right guide rail 40n disposed on the right side of the body 1.

The left guide rail 40m may guide the elevation of the left cable guide 20m.

The right guide rail 40n may guide the elevation of the right cable guide 20n.

The first modified example of the charger shown in FIGS. 19 and 20 may comprise a cable cover having a different position from the cable cover 10 shown in FIGS. 1 to 3.

The cable cover may comprise a left cover. The left cover may be disposed on the left of the left surface of the main body 1. The left cover may cover and protect a portion of the left charging cable 2m, the left cable guide 20m, the left damper 30m, and the left guide rail 40m.

The cable cover may comprise a right cover. The right cover may be disposed on the right of the right surface of the main body 1. The right may cover and protect a portion of the right charging cable 2n, the right cable guide 20n, the right damper 30n, and the right guide rail 40n.

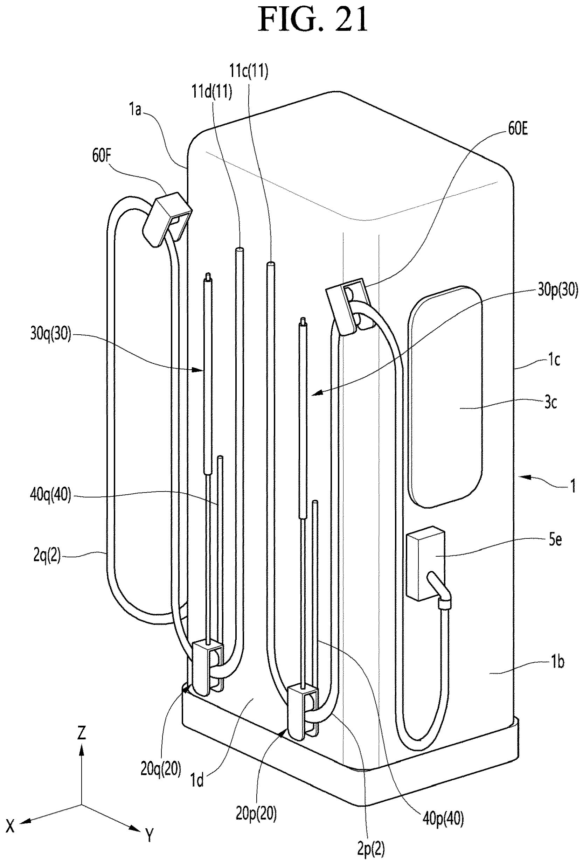

FIG. 21 is a perspective view of a second modified example of the charger shown in FIG. 17.

In the second modified example of the charger shown in FIG. 21, the positions of the plurality of charging cables 2, the plurality of cable guides 20, the plurality of dampers 30, and the plurality of guide rails 40 may be different them of the charger shown in FIGS. 17 and 18.

A plurality of charging cables 2, a plurality of cable guides 20, a plurality of dampers 30, and a plurality of guide rails 40 shown in FIG. 21 are disposed on one side surface of the left surface and right surface of the main body 1.

The plurality of cable guides 20, the plurality of dampers 30, and the plurality of guide rails 40 are disposed on one side of the main body 1 means that the plurality of cable guides 20, the plurality of dampers 30, and the plurality of guide rails 40 are disposed next to one side surface of the main body 1.

A plurality of charging cables 2, a plurality of cable guides 20, a plurality of dampers 30, and a plurality of guide rails 40 may be disposed together on one side surface of the left surface and right surface of the main body 1.

The plurality of charging cables 2 may comprise a side front charging cable 2p and a side rear charging cable 2q.

The side front charging cable 2p and the side rear charging cable 2q may be spaced apart in the front and rear direction (X).

A front outlet 11c may be formed on an upper portion of one side surface of the left surface and right surface of the main body 1. A front guide 60E for guiding and supporting the side front charging cable 2p may be disposed on an upper portion of one plate of the left plate 1c and the right plate 1d of the body 1. The front guide 60E may be closer to the front plate 1b of the front plate 1b and the rear plate 1a of the main body 1.

The side front charging cable 2p may extend from the main body 1 to the side of one side surface of the main body 1, is guided and supported by the front guide 60E, and extends forward of the front plate 1b of the main body 1.

A rear outlet 11d may be formed at an upper portion of one side surface of the left surface and right surface of the main body 1. The rear outlet 11d may be spaced apart from the front outlet 11c in the front-rear direction (X). A rear guide 60F for guiding and supporting the side rear charging cable 2q may be disposed on an upper portion of one side plate of the left plate 1c and the right plate 1d of the main body 1. The rear guide 60F may be closer to the rear plate 1a of the front plate 1b and the rear plate 1a of the main body 1.

The side rear charging cable 2q can extend from the main body 1 to the side of one side surface of the main body 1, is guided and supported by the rear guide 60F, and extends to the rear of the rear plate 1a of the main body 1.

The plurality of cable guides 20 may comprise a side front cable guide 20p and a side rear cable guide 20q.

The side front cable guide 20p may be disposed on one side of the main body 1, and can be moved up and down by the side front charging cable 2p, and can guide the side front charging cable 2p.

The side rear cable guide 20q may be disposed on one side of the main body 1 and can be moved up and down by the side rear charging cable 2q, and can guide the side rear charging cable 2q.

The plurality of dampers 30 may comprise a side front damper 30p and a side rear damper 30q.

The side front dampers 30p are connected to the side front cable guides 20p to limit rapid elevation of the side front cable guides 20p.

The side rear dampers 30q are connected to the side rear cable guides 20q to limit rapid elevation of the side rear cable guides 20q.

The plurality of guide rails 40 may comprise a side front guide rail 40p and a side rear guide rail 40q disposed on one side of the main body 1.

The side front guide rail 40p may guide the elevation of the side front cable guide 20p.

The side rear guide rails 40q may guide the elevation of the side rear cable guides 20q.

The second modified example of the charger shown in FIG. 21 may comprise a cable cover having a different position from the cable cover 10 shown in FIGS. 1 to 3.

The cable cover may comprise a side cover. Side cover may be disposed on one side of the main body (1). The side cover may cover and protect portions of each of the plurality of charging cables 2, the plurality of cable guides 20, the plurality of dampers 30, and the plurality of guide rails 40.

A rear display and a rear connector on which a side rear charging cable 2q are mounted may be disposed on the rear plate 1a of the main body 1.

A front display 3c and a front connector 5e on which the side front charging cable 2p are mounted may be disposed on the front plate 1b of the main body 1.

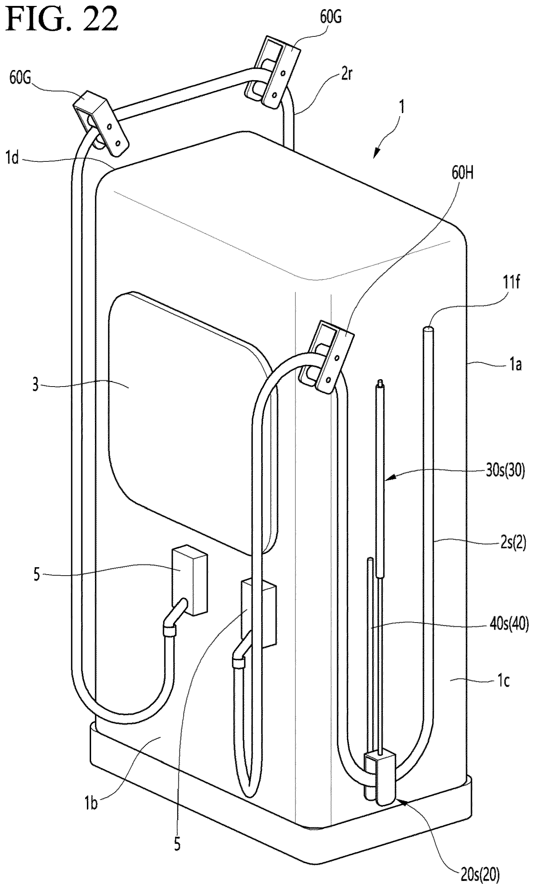

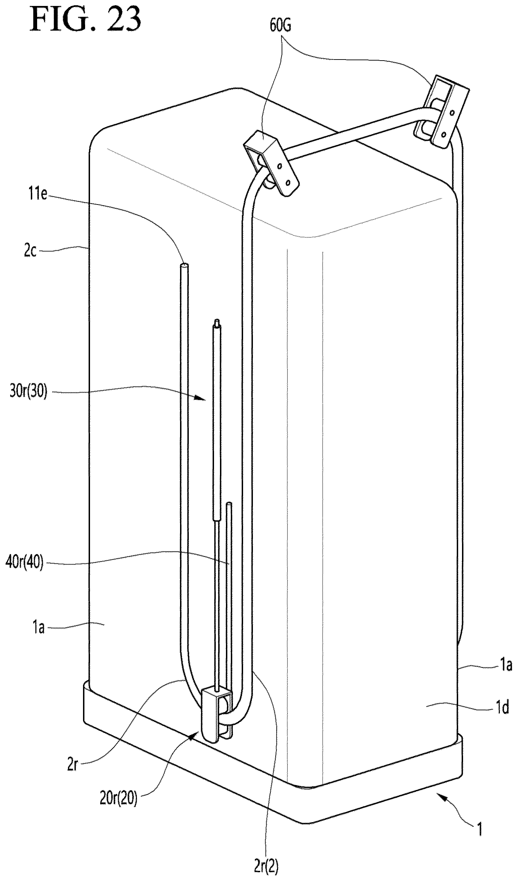

FIG. 22 is a perspective view of a third modified example of the charger shown in FIG. 17; and FIG. 23 is a view showing the rear of the charger shown in FIG. 22;
In the third modified example of the charger shown in FIGS. 22 and 23, the positions of each of the plurality of charging cables 2, the plurality of cable guides 20, the plurality of dampers 30, and the plurality of guide rails 40 are shown. 17 and 18 may be different from them of the chargers shown FIGS, 17 and 18.

A plurality of charging cables 2, a plurality of cable guides 20, a plurality of dampers 30, and a plurality of guide rails 40 may be disposed on the rear side the main body 1 and one side of the main body 1.

The plurality of cable guides 20, the plurality of dampers 30, and the plurality of guide rails 40 are disposed on the rear side and one side of the main body 1 means that the plurality of cable guides 20, the plurality of dampers 30 and the plurality of guide rails 40 are disposed the rear side of rear plate 1a and one side of the side plate 1c or 1d.

A plurality of charging cables 2, a plurality of cable guides 20, a plurality of dampers 30, and a plurality of guide rails 40 may be distributedly disposed on the rear side of rear plate 1a and one side plate 1c or 1d.

The plurality of charging cables 2 may comprise rear charging cable 2r and side charging cable 2s.

A rear outlet 11e may be formed at an upper portion of the rear plate 1a of the main body 1. An upper guide 60G for guiding and supporting the rear charging cable 2r may be disposed above the rear plate 1a of the main body 1. A pair of upper guides 60G may be provided on the upper side of the main body 1.

The rear charging cable 2r can extend from the main body 1 to the rear of the rear plate 1a of the main body 1, may be guided and supported by the upper guide 60G, and may be extended forward of the front plate 1b of the main body 1.

A side outlet 11f may be formed at an upper portion of one side plate of the main body 1 . A side guide 60H for guiding and supporting the side charging cable 2s may be disposed on an upper portion of one side plate of the main body 1.

The side charging cable 2s may extend from the body 1 to the side of one side plate of the body 1, is guided and supported by the side guide 60H, and may be extended forward of the front plate 1b of the body 1.

The plurality of cable guides 20 may comprise a rear cable guide 20r disposed on the rear of the body 1 and a side cable guide 20s disposed on one side surface of the main body 1.

The rear cable guide 20r is disposed on the rear of the main body 1, can be moved up and down by the rear charging cable 2r, and can guide the rear charging cable 2r.

The side cable guide 20s is disposed on one side surface of the main body 1, can be moved by the side charging cable 2s, and can guide the side charging cable 2s.

The plurality of dampers 30 may comprise a rear damper 30r and a side damper 30s.

The rear damper 30r is connected to the rear cable guide 20r to limit rapid elevation of the rear cable guide 20r.

The side damper 30s is connected to the side cable guide 20s to limit rapid elevation of the side cable guide 20s.

The plurality of guide rails 40 may comprise a rear guide rail 40r disposed on the rear of the main body 1 and a side guide rail 40s disposed on one side surface of the main body 1.

The rear guide rail 40r may guide the elevation of the rear cable guide 20r.

The side guide rail 40s may guide the elevation of the side cable guides 20s.

The third modified example of the charger shown in FIGS. 22 and 23 may comprise a cable cover having a different position from the cable cover 10 shown in FIGS. 1 to 3.

The cable cover may comprise a rear cover and a side cover.

The rear cover can cover and protect a portion of the rear charging cable 2r, the rear cable guide 20r, the rear damper 30r, and the rear guide rail 40r.

The side cover may cover and protect a portion of the side charging cable 2s, the side cable guide 20s, the side damper 30s, and the side guide rail 40s.

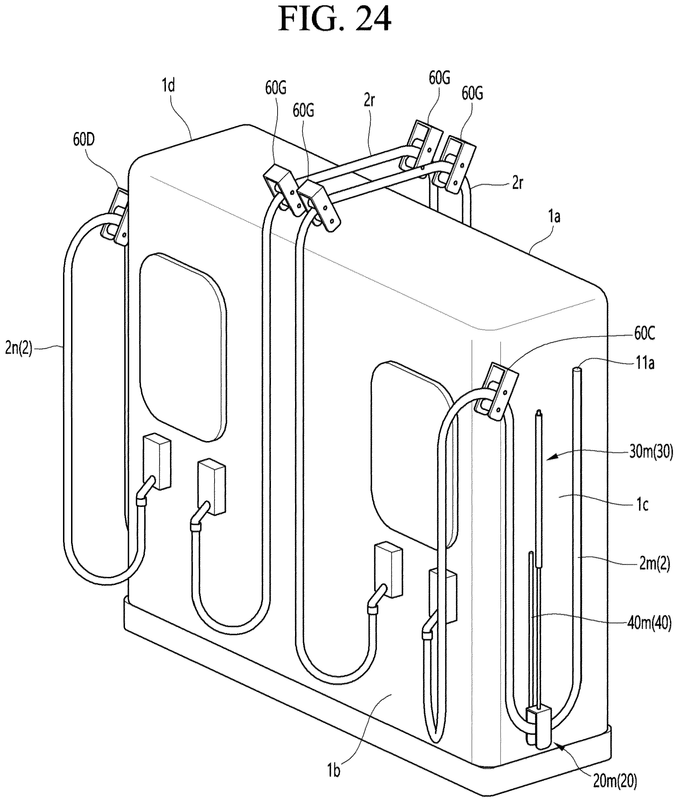

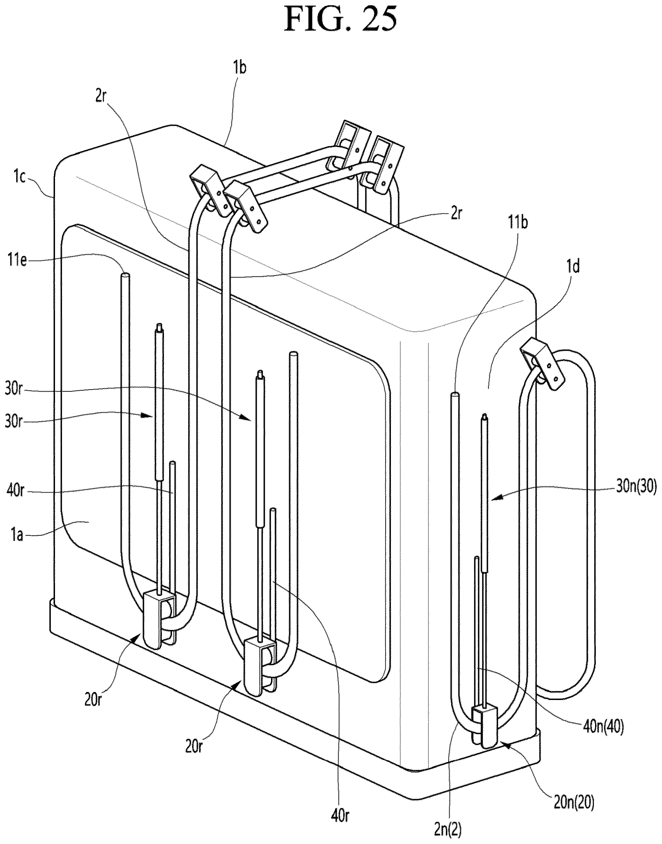

FIG. 24 is a perspective view of a fourth modified example of the charger shown in FIG. 17; and FIG. 25 is a view showing the rear side of the charger shown in FIG. 24;
In the fourth modified example of the charger shown in FIGS. 24 and 25, the positions of the plurality of charging cables 2, the plurality of cable guides 20, the plurality of dampers 30, and the plurality of guide rails 40 are shown. 17 and 18 may be different from them of the chargers shown in FIGS. 17 and 18.

A plurality of charging cables 2, a plurality of cable guides 20, a plurality of dampers 30, and a plurality of guide rails 40 may be disposed on the rear of the main body 1 and on both left and right surfaces of the main body 1

The plurality of cable guides 20, the plurality of dampers 30, and the plurality of guide rails 40 are disposed on the rear of the main body 1 and on both left and right surfaces of the main body 1 means that the plurality of cable guides 20, the plurality of dampers 30 and the plurality of guide rails 40 are distributively disposed on the rear side of the rear plate 1a, on the left side of the left plate 1c, and on the right side of the right side of the right plate 1d.

The plurality of charging cables 2 may comprise a pair of rear charging cables 2r, a left charging cable 2m, and a right charging cable 2n.

A pair of rear outlets 11e may be formed at an upper portion of the rear plate 1a of the main body 1. A pair of upper guides 60G may be disposed on the upper side of the main body 1 to guide and support the pair of rear charging cables 2r.

A pair of rear charging cables 2r may extend from the main body 1 to the rear of the rear plate 1a of the main body 1, are guided and supported by the upper guide 60G, and can be extended forward of the front plate 1b of the main body 1.

The left charging cable 2m may extend from the main body 1 to the left side of the left surface of the body 1. A left outlet 11a may be formed at an upper portion of the left plate 1c of the main body 1.

The right charging cable 2n may extend from the main body 1 to the right of the right surface of the main body 1. A right outlet 11b may be formed on the upper portion of the right plate 1d of the main body 1.

Each of the left charging cable 2m and the right charging cable 2n may extend from the side of the main body 1 to the front of the front plate 1b of the main body 1.

A left guide 60C for guiding and supporting the left charging cable 2m may be disposed above the left plate 1c of the main body 1.

A right guide 60D for guiding and supporting the right charging cable 2n may be disposed above the right plate 1d of the main body 1.

The left guide 60C and the right guide 60D may be closer to the front plate 1b of the main body 1 than to the rear plate 1a of the main body 1.

The left guide 60C and the right guide 60D may be similar to the arm guide 60 shown in FIG. 16, especially the rear guide 60A.

The plurality of cable guides 20 comprise a rear cable guide 20r disposed on the rear of the main body 1, a left cable guide 20m disposed on the left side of the main body 1, and a right cable guide 20n disposed on the right side of the main body 1.

A pair of rear cable guides 20r may be disposed on the rear of the main body 1. Any one of the pair of rear cable guides 20r can be moved and guided by any one of the pair of rear cables 2r. The other of the pair of rear cable guides 20r can be moved and guided by the other of the pair of rear cables 2r.

The left cable guide 20m is disposed on the left side of the main body 1 so that it can be moved up and down by the left charging cable 2m, and can guide the left charging cable 2m.

The right cable guide 20n is disposed on the right side of the main body 1 so that it can be moved up and down by the right charging cable 2n, and can guide the right charging cable 2n.

The plurality of dampers 30 comprise a rear damper 30r connected to the rear cable guide 20r, a left damper 30n connected to the left cable guide 20m, and a right damper 30n connected to the right cable guide 20n.

A pair of rear dampers 30r may be disposed on the rear of the main body 1. Any one of the pair of rear dampers 30r may be connected to any one of the rear cable guides 20r to limit rapid elevation of any one of the rear cable guides 20r. The other of the pair of rear dampers 30r is connected to the other of the rear cable guides 20r to limit the rapid elevation of the other of the rear cable guides 20r.

The left damper 30m is connected to the left cable guide 20m to limit rapid elevation of the left cable guide 20m.

The right damper 30n may be connected to the right cable guide 20n to limit rapid elevation of the right cable guide 20n.

The plurality of guide rails 40 comprise a rear guide rail 40r disposed on the rear of the main body 1, a right guide rail 40n disposed on the left side of the main body 1, and a right guide rail 40n disposed on the right side of the main body 1.

A pair of rear dampers 30r may be disposed on the rear of the main body 1. Any one of the pair of rear guide rails 40r may guide the elevation of one of the pair of rear cable guides 20r, and the other of the pair of rear guide rails 40r may guide the elevation of the other of the pair of rear cable guides 20r.

The left guide rail 40m may guide the elevation of the left cable guide 20m. The right guide rail 40n may guide the elevation of the right cable guide 20n.

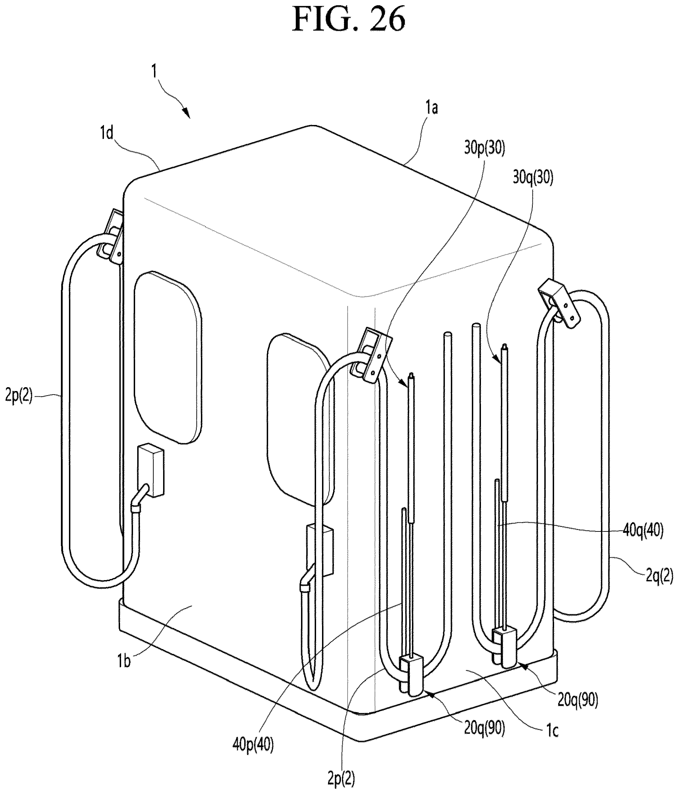

FIG. 26 is a perspective view of a fifth modified example of the charger shown in FIG. 17

The charger shown in FIG. 26 is an example in which the second modified example of the charger shown in FIG. 21 is disposed symmetrically left and right with respect to the main body 1.

The charger shown in FIG. 26 may comprise four charging cables 2, and the four charging cables 20 comprise a pair of side front charging cables 2p and a pair of side rear charging cables 2q.

A pair of side front charging cables 2p may be disposed left and right symmetrically with respect to the main body 1, and a pair of side rear charging cables 2q may be disposed left and right symmetrically with respect to the body 1.

The plurality of cable guides 20, the plurality of dampers 30, and the plurality of guide rails 40 may be disposed symmetrically to the left and right with respect to the main body 1, and to avoid overlapping descriptions, the same reference numeral are used and a detailed description thereof is omitted.

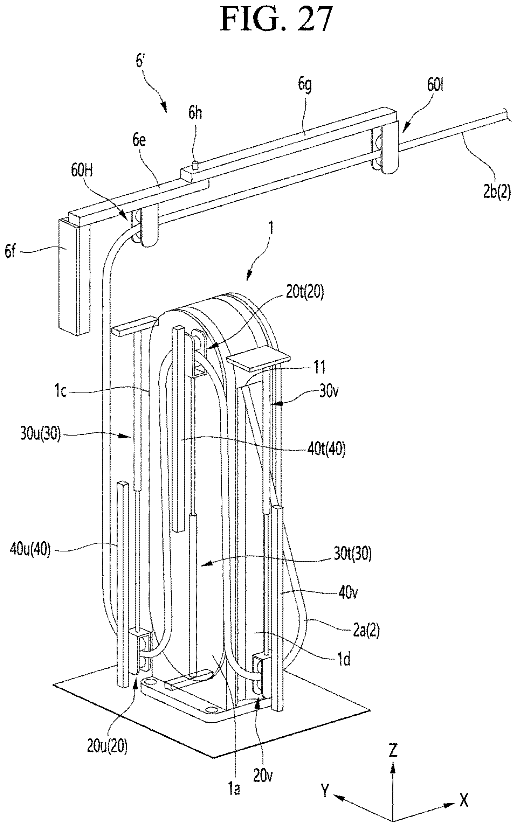

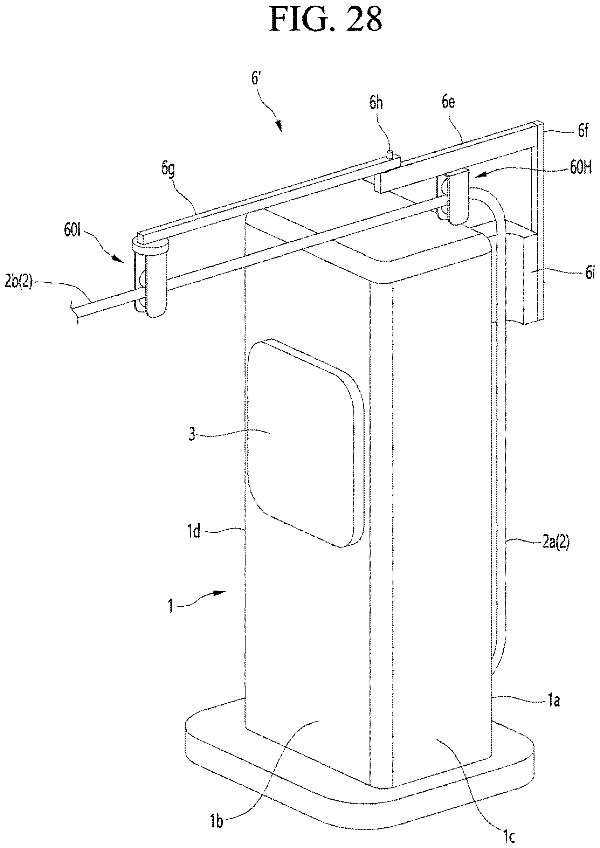

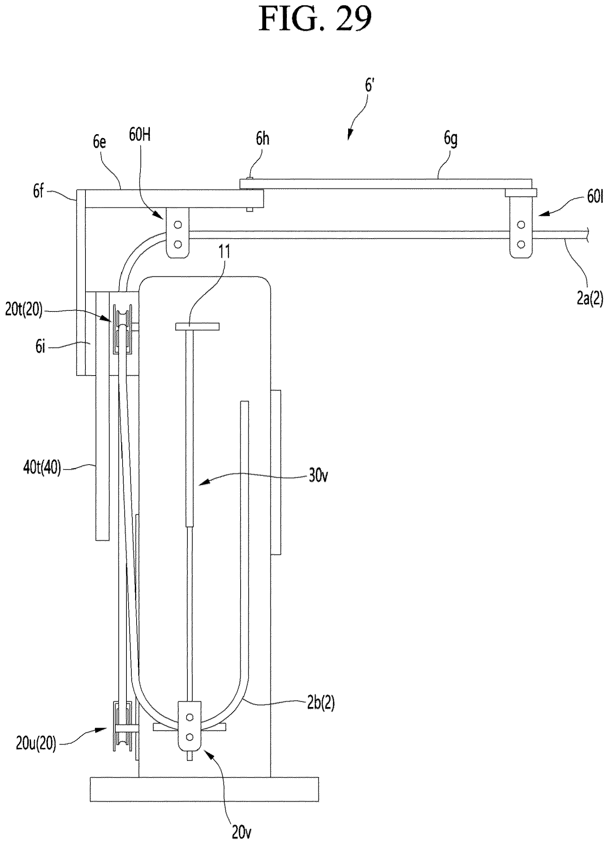

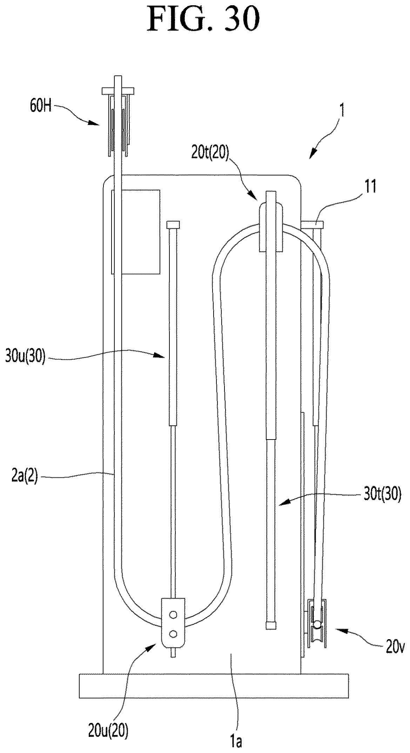

FIG. 27 is a diagram showing another example of a charger according to this embodiment; FIG. 28 is a perspective view showing another example of a charger according to this embodiment; FIG. 29 is a side view showing the side of another example of the charger according to the present embodiment; and FIG. 30 is a rear view showing the rear of another example of a charger according to this embodiment.

As shown in FIGS. 27 to 30, another example of the charger according to the present embodiment comprises a main body 1, a charging cable 2, a screen 3, a plurality of cable guides 20, and a plurality of dampers 30.

The main body 1 may be the same as or similar to the main body 1 shown in FIG. 1, and the same reference numerals are used to avoid redundant description, and detailed descriptions thereof are omitted. An outlet 11 through which the charging cable 2 passes may be formed in the main body 1 or a cable connector to which the charging cable 2 is connected may be provided. The outlet 11 or the cable connector may be provided on a side surface of the main body 1 as it may be provided on a surface other than the front surface of the main body 1. The outlet 11 or the cable connector may be provided on one of the left and right sides of the main body 1.

The charging cable 2 may be connected to the main body 1. The charging cable 2 may be the same as or similar to the charging cable 2 shown in FIG. 1, and the same reference numerals are used to avoid redundant description, and detailed descriptions thereof are omitted. The charging cable 2 may comprise a concealed portion 2a accommodated inside the charger and an exposed portion 2b drawn out of the charger.

The charging cable 2 may be disposed on at least two sides of the main body 1. The charger cable 2 may extend to the side of the main body 1 and may extend to the rear of the main body 1. The charging cable 2 may extend upward of the main body 1.

The charger may further comprise a cable cover (not shown). The cable cover may be disposed on the main body 1, and an inner space in which the charging cable 1 is accommodated may be formed inside the cable cover. The cable cover may be disposed on one surface of the main body 1 or disposed on multiple surfaces. The cable cover may comprise a side cover disposed on the side of the main body 1. The side cover can hide and protect the charging cable disposed between the side of the main body 1 and the side cover. The cable cover may comprise a rear cover disposed on the rear surface of the main body 1. The rear cover can hide and protect the charging cable disposed between the rear of the main body 1 and the rear cover.

The screen 3 may be provided on the front of the main body 1. The screen 3 is manipulated by a user and may be disposed on the front of the main body 1.

A plurality of cable guides 20 may be disposed on the first surface of the main body 1.

Here, the first surface of the main body 1 may be a surface other than the front surface of the main body 1, and may be one of the side surfaces and the rear surface of the main body 1. In this embodiment, the first surface of the main body 1 is described as the rear surface of the main body 1, but the first surface of the main body 1 is not limited to the rear surface of the main body 1, and it is possible to be either the left surface or the right surface.

In addition, the arrangement of the plurality of cable guides 20 on the first surface of the main body 1 may mean that the plurality of cable guides 20 are disposed between the first surface of the main body 1 and the cable cover.

A plurality of cable guides 20 may be disposed on the first surface so as to be able to move up and down. A plurality of cable guides 20 may be movably disposed between the first surface of the main body 1 and the cable cover.

The plurality of cable guides 20 may sequentially guide the charging cable 2.

Each of the plurality of cable guides 20 may be the same as or similar to the cable guide 20 shown in FIGS. 5 to 7 or the cable guide 20 shown in FIG. 8, and the same reference numerals are used to avoid redundant description, and a detailed description thereof is omitted.

A plurality of cable guides 20 may be disposed spaced apart from each other. The plurality of cable guides 20 may be moved up and down in opposite directions. When one of the plurality of cable guides 20 is lowered, the other of the plurality of cable guides 20 may be raised, and conversely, when one is raised, the other may be lowered.

An example of the plurality of cable guides 20 may comprise a first cable guide 20t and a second cable guide 20u.

The first cable guide 20t may be moved up and down between the rear upper surface of the main body 1 and the rear central surface of the main body 1.

The first cable guide 20t may descend from the rear surface of the upper portion of the rear plate 1a to rear surface of the central portion of the rear plate 1a, and conversely, may again rise from rear surface of the central portion of the rear plate 1a to the rear surface of the upper portion of the rear plate 1a.

The second cable guide 20u may be moved up and down between the rear lower surface of the main body 1 and the rear central surface of the main body 1. The second cable guide 20u may rise from the rear surface of the lower portion of the rear plate 1a to rear surface of the central portion of the rear plate 1a, and conversely, may again rise from rear surface of the central portion of the rear plate 1a to the rear surface of the lower portion of the rear plate 1a.

The plurality of cable guides 20 are not limited to two, and may be provided with three or four.

A plurality of dampers 30 may be connected to a plurality of cable guides 20. The damper 30 may correspond 1:1 to the cable guide 20.

Each of the plurality of dampers 30 may be the same as or similar to the dampers 30 shown in FIGS. 5, 10 and 11, and the same reference numeral is used to avoid redundant description, and detailed description thereof will be omitted.

The plurality of dampers 30 may comprise a lower damper 30t and an upper damper 30u.

The lower damper 30t may be connected to a first cable guide 20t of the plurality of cable guides 30.

The lower damper 30t may be located below the first cable guide 20t, and may limit the rapid elevation of the first cable guide 20t.

A rod mount 34 mounted on the bracket 21 of the first cable guide 20t may be disposed at an upper end of the piston rod 32 of the lower damper 30t.

The lower damper 30t may be disposed on the lower portion of the rear surface of the main body 1. Here, the arrangement of the lower damper 30t on the lower portion of the rear surface of the main body 1is not limited to that the lower damper 30t is mounted on the main body 1, and mean that the lower damper 30t may be installed at least one of the main body 1 and the cable cover.

The upper damper 30u may be connected to the second cable guide 20u of the plurality of cable guides 30.

The upper damper 30u may be located above the second cable guide 20u, and may limit the rapid elevation of the second cable guide 20u.

A rod mount 34 mounted on the bracket 21 of the second cable guide 20u may be disposed at a lower end of the piston rod 32 of the upper damper 30u.

The upper damper 30u may be disposed on the upper portion of the rear surface of the main body 1. Here, the arrangement of the upper damper 30u on the upper portion of the rear surface of the main body 1 is not limited to that the upper damper 30u is mounted on the main body 1, and mean that the upper damper 30u may be installed at least one of the main body 1 and the cable cover.

The charger may comprise a plurality of guide rails 40 that guide the plurality of cable guides 20 to be raised or lowered. The guide rail 40 and the cable guide 20 may correspond 1:1.

The plurality of guide rails 40 may comprise a first guide rail 40t and a second guide rail 40u.

The first guide rail 40t may guide the first cable guide 20t up and down. The first guide rail 40t may be disposed on the upper portion of the rear surface of the main body 1. Here, the arrangement of the first guide rail 40t on the upper portion of the rear surface of the main body 1 is not limited to mounting the first guide rail 40t on the rear upper surface of the main body 1, and mean that the first guide rail 40t may be installed at least one of the main body 1 and the cable cover. When the first guide rail 40t is mounted on the cable cover, the first guide rail 40t may be spaced apart from the body 1. The first cable guide 20t may be elevated between the main body 1 and the first guide rail 40t.

The second guide rail 40u may guide the second cable guide 20u up and down. The second guide rail 40u may be disposed on the lower portion of the rear surface of the main body 1. Here, the arrangement of the second guide rail 40u on the lower portion of the rear surface of the main body 1 is not limited to mounting the second guide rail 40u on the lower rear surface of the main body 1, and mean that the second guide rail 40u may be installed at least one of the main body 1 and the cable cover. When the second guide rail 40u is mounted on the cable cover, the second guide rail 40u may be spaced apart from the body 1. The second cable guide 20u may be elevated between the main body 1 and the second guide rail 40u.

The charger may further comprise a side cable guide 20v, a side damper 30v and a side guide rail 40v.

The side cable guide 20v is disposed on the side of the main body 1 so as to be able to move up and down and guides the charging cable 2. The side cable guide 20v may be lifted from one of the left and right sides of the body 1.

The side cable guide 20v may be the same as or similar to the cable guide 20 shown in FIGS. 5 to 7 or the cable guide 20 shown in FIG 8. A detailed description thereof is omitted.

The side damper 30v may be connected to the side cable guide 20v. The side damper 30v may be the same as or similar to the damper 30 shown in FIGS. 5, 10 and 11, and the same reference numeral is used to avoid redundant description, and detailed description thereof will be omitted.

The side damper 30v may be positioned above the side cable guide 20v and may limit the rapid elevation of the side cable guide 20v.

A rod mount 34 mounted on the bracket 21 of the side cable guide 20v may be disposed at a lower end of the piston rod 32 of the side damper 30v.

The side damper 30v may be disposed on the upper portion of one side surface of the main body 1. Here, the arrangement that the side damper 30v is disposed on the upper portion of one side surface of the main body 1 is not limited to that the side damper 30v is installed on the main body 1, and mean that the side damper 30v may be installed at least one of the main body 1 and the cable cover.

The side guide rails 40v may guide the side cable guides 20v up and down.

The side guide rail 40v may be disposed on lower portion of the side surface of the main body 1. Here, the arrangement that the side guide rail 40v is not limited to being mounted on lower portion of the side surface of the main body 1, mean that the side guide rail 40v may be at least one of the main body 1, and the cable cover,
When the side guide rails 40v is mounted on the cable cover, the side guide rails 40v may be spaced apart from the main body 1. The side cable guide 20v may be elevated between the main body 1 and the side guide rail 40v.

The charger further comprises an upper cable guide 6' disposed above the main body 1.

An example of the upper cable guide 6' may comprises a fixed bracket 6f having a long extension 6e in the front-rear direction X, and a movable bracket 6g arranged to rotate or slide on the extension 6e.

The movable bracket 6g may be disposed elongately in the extension direction X of the extension 6e, and may be rotated left and right direction to have an acute or obtuse inclination angle with the extension 6e.

A connecting portion 6h rotatably connecting the movable bracket 6g to the extension 6e may be formed at a front portion of the extension portion 6e or a rear portion of the movable bracket 6g.

A mounter 6i to which the upper cable guide 6' is mounted may be disposed on the main body 1. The mounter 6i may be disposed above the upper portion of rear surface of the main body 1. The fixing bracket 6f may be mounted on the mounter 6i.

An example of the upper cable guide 6' may further comprise a fixed cable guide 60H installed on the fixed bracket 6f and a movable cable guide 60I installed on the movable bracket 6g.

Each of the fixed cable guide 60H and the movable cable guide 60I may be the same as or similar to a pair of arm guides 60A and 60B shown in FIG. 16. Each of the fixed cable guide 60H and the movable cable guide 60I may comprise an arm bracket 61 and an arm pulley 62, like the arm guides 60A and 60B shown in FIG. 16.

Another example of the upper cable guide 6' may comprise the arm body 6 and a plurality of arm guides 60Aand60B.

An arm space S1 may be formed in the arm body 6. An arm rail 7 guiding the charging cable 2 may be formed on the arm body 6. The arm body 6 may be the same as or similar to the arm body 6 shown in FIGS. 1 to 6 and 16, and hereinafter, the same reference numeral is used to avoid redundant description, and a detailed description thereof will be omitted.

A plurality of arm guides 60A and 60B may be accommodated in the arm space S1. At least one of the plurality of arm guides 60A and 60B may be inclined forward or backward. The plurality of arm guides 60A (60B) may be the same as or similar to the pair of arm guides 60A (60B) shown in FIG. omit explanation.

The charging cable 2 may comprise a first charging cable portion located next to the main body 1, and the first charging cable portion may be curved in a "U" shape by the side cable guide 20v.

The first charging cable part may extend to the rear of the main body 1, and the charging cable 2 may comprise a second charging cable portion extending from the first charging cable portion. The second charging cable part may be curved in a "∩" shape by the first cable guide 20t.

The charging cable 2 may comprise a third charging cable portion extending from the second charging cable portion. The third charging cable portion may be curved in a "U" shape by the second cable guide 20u.

Another example of the charger as described above is when the charging cable 2 is pulled in the pull-out direction, the second cable guide 20u may be raised, the first cable guide 20t may be lowered, and the side cable guide 20v may be raised.

In another example of the charger, when the pulling force applied to the charging cable 2 is removed, the second cable guide 20u, the first cable guide 20t, and the side cable guide 20v can be restored, and charging cable 2 can be retracted. When the charging cable 2 is lead in, the second cable guide 20u may be lowered, the first cable guide 20t may be raised, and the side cable guide 20v may be lowered.

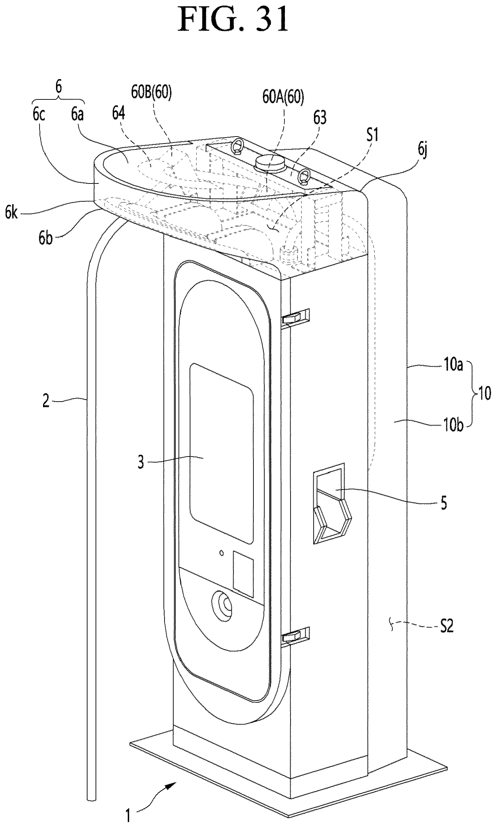

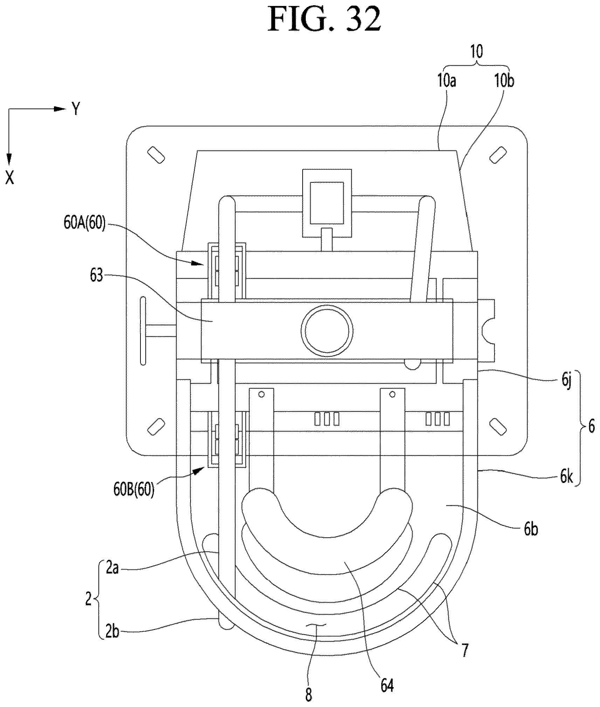

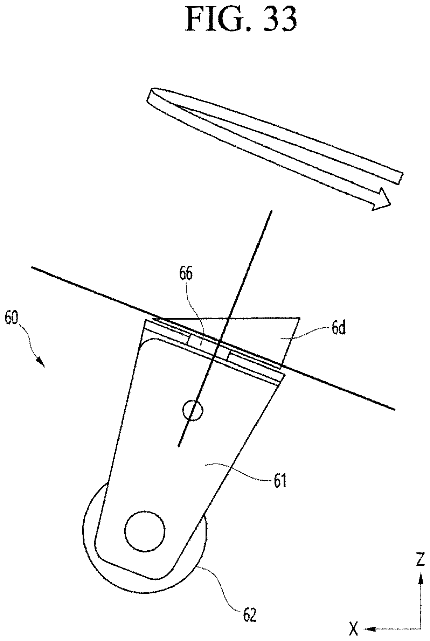

FIG. 31 is a diagram showing the other example of a charger according to this embodiment; FIG. 32 is a diagram showing an example of an arm guide rail according to the present embodiment; and FIG. 33 is a diagram showing an example of an arm guide according to the present embodiment.

The charger may comprise a main body 1 to which a charging cable 2 is connected; an arm body 6 disposed on the main body 1 and having an arm space S1; an arm rail 7 formed in the arm body 6 and having the outlet 8 through which the charging cable 2 passes, and an arm guide 60 accommodated in the arm space S1 and guiding the charging cable 2.

The main body 1 may be the same as or similar to the main body 1 shown in FIGS. 1 to 5, and the same reference numeral is used to avoid redundant description, and detailed descriptions thereof are omitted.

The charging cable 2 may be the same as or similar to the charging cable 2 shown in FIGS. 1 to 6, and the same reference numeral is used to avoid redundant description, and detailed descriptions thereof are omitted.

The arm body 6 may be disposed above the main body 1.

The arm body 6 may comprise an upper plate 6a, a lower plate 6b, and a border body 6c. The arm space S1 may be formed by the upper plate 6a, the lower plate 6b, and the border body 6

The arm body 6 may be divided into an upper body 6j disposed above the main body 1 and a protruding body 6k protruding forward from the upper body 6j.

The upper body 6j may be formed by a rear portion of the top plate 6a and a rear portion of the border body 6c.

The protruding body 6k may be formed by the front portion of the upper plate 6a, the front portion of the border body 6c, and the lower plate 6b.

The lower plate 6b of the protruding body 6k may be inclined toward the front lower side.

The arm body 6 may be the same as or similar to the arm body 6 shown in FIGS. 1 to 6, and to avoid redundant description, the same reference numerals are used and detailed description thereof will be omitted.

The arm rail 7 may be formed on the lower plate 6b of the protruding body 6k. The arm rail 7 may be the same as or similar to the arm rail 7 shown in FIG. 6, and the same reference numeral is used to avoid redundant description, and detailed descriptions thereof are omitted.

A plurality of arm guides 60 may be provided. A pair of arm guides 60 may be provided, and at least one of the pair of arm guides 60A and 60B may be disposed inclined toward the rear. The pair of arm guides 60A and 60B may comprise a rear guide 60A and a front guide 60B. The pair of arm guides 60A and 60B may be disposed gradually closer toward the lower side.

The arm guide 60 may be the same as or similar to the arm guide 60 shown in FIG. 16, and the arm guide 60 comprises an arm bracket 61 and at least one arm pulley 62 rotatably disposed on the arm bracket 61, to avoid redundant description, the same reference numeral is used and detailed description thereof will be omitted.

As shown in FIG. 33, at least one of the plurality of arm guides 60 may be disposed to be rotated around the rotation axis 66. The rotating shaft 66 may be rotatably disposed on the mounter 6d.

Each of the rear guide 60A and the front guide 60B may be rotatably installed. It is also possible that only one of the rear guide 60A and the front guide 60B is rotatably installed and the other is fixedly installed. Hereinafter, it will be described that each of the rear guide 60A and the front guide 60B is rotatably installed, but is not limited thereto.

The rear guide 60A may be rotated around the rotation shaft 66. The rotation shaft 66 may be provided to the arm bracket 61 of the rear guide 60A. The rear guide 60A may swing around the rotation shaft 66.

The front guide 60B may be rotated around the rotation shaft 66. The rotating shaft 66 may be provided to the arm bracket 61 of the front guide 60B. The front guide 60B may swing around the rotation axis 66.

The charger may further comprise an arm guide rail disposed on the arm body 6 and guiding the arm guide 60.

The arm guide rail may hold the arm guide 60 so that the arm guide 60 is movable.

The arm guide rail may have an arc shape or a long straight line shape in the left and right directions.

A plurality of arm guide rails may be provided. The plurality of arm guide rails may comprise a rear arm guide rail 63 and a front arm guide rail 64.

The rear arm guide rail 63 may be a straight rail. The rear arm guide rail 63 may be formed in a long straight shape in the left and right directions. The rear guide 60A may be guided in the longitudinal direction of the rear arm guide rail 63 along the rear arm guide rail 63. The rotating shaft 66 of the rear guide 60A or the mounter 6d may be slidably disposed on the rear arm guide rail 63. The rotating shaft 66 of the rear guide 60A or the mounter 6d can be slide-guided on the rear arm guide rail 63. The rear guide 60A may be guided in the left and right direction Y along the rear arm guide rail 63.

The arm pulley 62 of the rear guide 60A may be positioned on the rear arm guide rail 6 , and the center of the swing motion of the arm pulley 62 may coincide with the rear arm guide rail 63.

The rear guide 60A may be rotated around the rotation shaft 66 while being guided along the rear arm guide rail 63.

When the charging cable 2 moves in the left and right direction Y, the rear guide 60A can be slide-guided in the left and right direction Y while being rotated, and sudden bending or wear of the charging cable 2 can be minimized., twisting of the charging cable 2 can be minimized.

The front arm guide rail 64 may be a curved rail. The front arm guide rail 64 may have an arc shape. An imaginary line connecting both ends of the front arm guide rail 64 may be parallel to the rear arm guide rail 63. The front guide 60B may be guided in the longitudinal direction of the front arm guide rail 64 along the front arm guide rail 64. The rotating shaft 66 of the front arm guide 60A or the mounter 6d may be slidably disposed on the front arm guide rail 64. The rotating shaft 66 of the front arm guide 60A or the mounter 6d can be slide-guided on the front arm guide rail 64. The front guide 60B may be guided in an arc-shaped trajectory along the front arm guide rail 64.

The front arm guide rail 64 may be closer to the outlet 8 than the rear arm guide rail 63.

The arm pulley 62 of the front guide 60B may be positioned on the front arm guide rail 64 and the center of the swing motion of the arm pulley 62 may coincide with the front arm guide rail 64.

The front guide 60B may be rotated around the rotation shaft 66 while being guided along the front arm guide rail 64.

When there is no movement of the charging cable 2, the length of the portion located inside the arm body 6 of the charging cable 2 may be constant.

When the charging cable 2 moves in the left and right direction Y, the front guide 60B can be slid and guided in the longitudinal direction of the front arm guide rail 64 while being rotated, sudden bending or abrasion of the charging cable 2 can be minimized.

The other example of the charger shown in FIGS. 31 to 33 may have the same or similar configuration and operation as the charger shown in FIGS. 1 to 16 other than the rotating shaft 66 and the arm guide rails 34 and 35. There is, and the same reference numerals are used for other configurations other than the rotating shaft 66 and the arm guide rails 34 and 35. The description thereof is omitted to avoid redundant description.

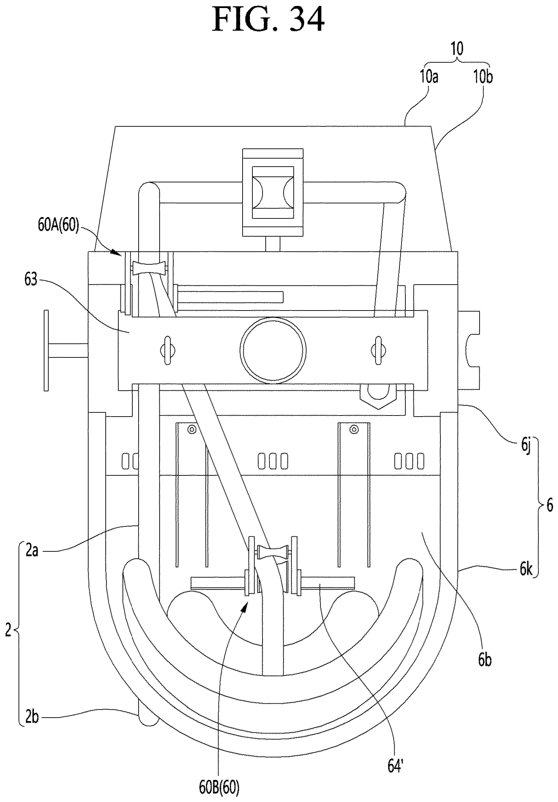

FIG. 34 is a view showing another example of an arm guide rail according to the present embodiment.

The arm guide 60 shown in FIG. 34 may be the same as or similar to the arm guide 60 shown in FIGS. 32 and 33, and to avoid redundant description, the same reference numeral is used and detailed description thereof will be omitted.

The arm guide rail shown in FIG. 34 may comprise a rear arm guide rail 63 and a front arm guide rail 64'.

The rear arm guide rail 63 may be the same as or similar to the rear arm guide rail 63 shown in FIG. 32, and to avoid redundant description, the same reference numeral is used and detailed descriptions thereof are omitted.

The front arm guide rail 64' may be a straight rail. The front arm guide rail 64' may be formed in a long straight shape in the left-right direction (Y). The front arm guide rail 64' may be parallel to the rear arm guide rail 63. The height of the front arm guide rail 64' may be different from that of the rear arm guide rail 63. The front guide 60B may be guided in the longitudinal direction Y of the front arm guide rail 64' along the front arm guide rail 64'. The rotating shaft 66 of the front guide 60B or the mounter 6d may be slidably disposed on the front guide 60B. The rotating shaft 66 of the front guide 60B or the mounter 6d can be slide-guided to the front guide 60B. The front guide 60B may be linearly guided in the left-right direction Y along the front arm guide rail 64'.

The front arm guide rail 64' may be closer to the outlet 8 than the rear arm guide rail 63, and the front guide 60B is guided along the front arm guide rail 64' while rotating the shaft 66 can be rotated around.

In this case, the arm pulley 62 of the front guide 60B may be positioned on the front arm guide rail 64 ', and the center of the swing motion of the arm pulley 62may coincide with the front arm guide rail 64 '.

When there is no movement of the charging cable 2, the length of the portion located inside the arm body 6 of the charging cable 2 may be constant. The front guide 60B may be positioned on the front arm guide rail 64' so that the cable length difference is minimized.

When the charging cable 2 moves in the left and right direction Y, the front guide 60B can be slid and guided in the left and right direction Y while being rotated, and rapid bending or wear of the charging cable 2 can be minimized, and the charging cable 2 can be gently bent in the left and right direction Y by the front guide 60B.

Another example of the arm guide rail shown in FIG. 34 may be the same as or similar to the front arm guide rail 64 shown in FIG. 32 in configuration other than the shape and guide direction of the front arm guide rail 64', and to avoid redundant description, the same reference numeral is used and detailed descriptions thereof are omitted.

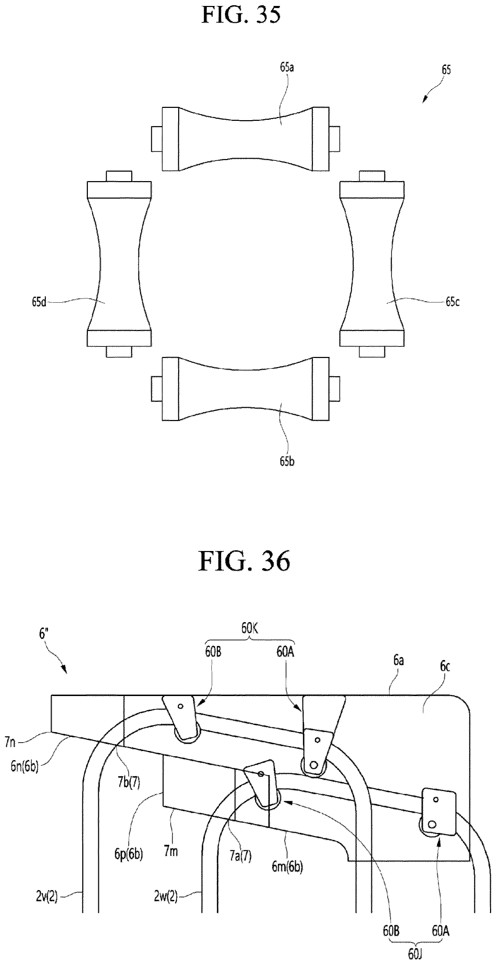

FIG. 35 is a view showing a roller disposed on the arm body according to the present embodiment.

The charger may further comprise at least one roller 65 in contact with the charging cable 2.

At least one roller 65 may be rotatably disposed on the lower plate 6b of the arm body 6. A roller accommodating portion in which a roller can be accommodated may be recessed in the lower plate 6b of the arm body 6.

The roller 65 may be rotatably accommodated in the roller accommodating portion.

It is preferable that a plurality of rollers 65 are provided.

The plurality of rollers 65 may comprise a rear roller 65a, a front roller 65b, a left roller 65c and a right roller 65d.

A plurality of rollers 65 may be disposed on the arm body 6 to be spaced apart from each other.

The roller 65 may be positioned close to the arm rail 7 of the lower plate 6b of the arm body 6, and abrasion of the coating of the charging cable 2 may be minimized.

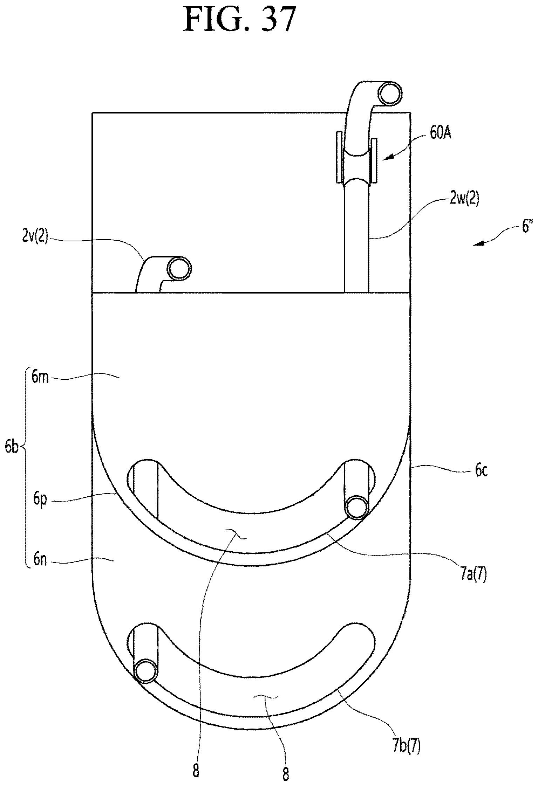

FIG. 36 is a cross-sectional view showing a modified example of the arm body according to the present embodiment; and FIG. 37 is a bottom view showing a modified example of the arm body according to the present embodiment.

A plurality of charging cables 2 may be connected to the main body 1.

When the plurality of charging cables 2 are connected to the main body 1, it is preferable that the plurality of charging cables 2 do not interfere as much as possible, and a modification of the arm body 6 "is a plurality of charging cables 2 is an example of minimizing interference between the plurality of charging cables 2.

The plurality of charging cables 2 are not limited in number, such as two, three, four, etc., but hereinafter, for convenience of description, the plurality of charging cables 2 comprise the first charging cable 2w and the second charging cable 2v.

The arm rail 7 may comprise a lower arm rail 7a through which one of the plurality of charging cables 2 passes and an upper arm rail 7b through which the other of the plurality of charging cables 2 passes.

One of the plurality of charging cables 2 may be the first charging cable 2w or may be a lower charging cable.

The other of the plurality of charging cables 2 may be the second charging cable 2v and may be an upper charging cable.

The lower arm rail 7a and the upper arm rail 7b may be separated from each other.

The height of the upper arm rail 7b may be higher than that of the lower arm rail 7a.

The arm body 6" may comprise a lower protruding body 7m on which a lower arm rail 7a is formed and an upper protruding body 7n on which an upper arm rail 7b is formed.

The lower protruding body 7m may be disposed below the upper protruding body 7n.

The upper protruding body 7n may protrude more forward than the lower protruding body 7m.

The arm body 6" may comprise an upper plate 6a, a lower plate 6b, and a border body 6c, and the lower plate 6b may have a shape bent like a step shape.

The lower plate 6b comprises a first lower plate portion 6m on which the lower arm rail 7a is formed, a second lower plate portion 6n on which the upper arm rail 7b is formed, and a connection portion 6p connecting the first lower plate portion 6m and the second lower plate portion 6n.

The first lower plate portion 6m may form a lower surface of the lower protruding body 7m. The first lower plate portion 6m may be inclined toward the front lower side.

The connecting portion 6p may form the front surface of the lower protruding body 7m. The connecting portion 6p may be vertical.

The second lower plate portion 6n may form a lower surface of the upper protruding body 7n. The second lower plate portion 6n may be formed to be inclined toward the front lower side.

A plurality of arm guides 60 may be provided in the arm body 6.

The plurality of arm guides 60 comprise a lower arm guide 60J accommodated in the lower protruding body 7m; and an upper arm guide 60K accommodated in the upper protruding body 7n.

The lower arm guide 60J may guide the first charging cable 2w.

The upper arm guide 60K may guide the second charging cable 2v. The upper arm guide 60K may be spaced apart from the lower arm guide 60J.

Each of the lower arm guide 60J and the upper arm guide 60K may comprise a rear guide 60A and a front guide 60B.

The front guide 60B of the lower arm guide 60J may be positioned ahead of the rear guide 60A of the upper arm guide 60K.

The lower arm guide 60J may be disposed biasedly on one side (eg, the left side) of the left side and the right side of the border body 6c.

The upper arm guide 60K may be disposed biasedly on the other side (for example, the right side) of the left side and the right side of the border body 6c.

According to this embodiment, the cables can be protected and managed while minimizing contamination of the cables by the cable cover.

In addition, a damper connected to the bracket of the cable guide adjusts the speed at which the cable is restored, thereby minimizing shock or damage that may occur when the cable is rapidly restored.

The above description is merely an example of the technical idea of the present invention, and various modifications and variations can be made to those skilled in the art without departing from the essential characteristics of the present invention.

Therefore, the embodiments disclosed in the present invention are not intended to limit the technical idea of the present invention, but to explain, and the scope of the technical idea of the present invention is not limited by these embodiments.

The protection scope of the present invention should be construed according to the claims below, and all technical ideas within the equivalent range should be construed as being comprised in the scope of the present invention.

## Claims

1. A charger comprising:
a cable cover (10) disposed on a main body (1) to which a charging cable (2) is connected and having an inner space (S2) therein;
a cable guide (20) movably accommodated in the inner space (S2) and comprising a bracket(21) and at least one pulley (22) rotatably installed on the bracket (21); and
a damper (30) connected to the bracket (21).

2. The charger according to claim 1,
wherein a guide rail (40) for guiding elevation of the cable guide (20) is disposed on the main body (1) or the cable cover(10).

3. The charger according to claim 2,
wherein a stopper (42) is provided on the guide rail (40) and the bracket (21) is caught on the stopper (42).

4. The charger according to claim 2 or 3,
wherein a damping spring (44) is provided on at least one of the guide rail (40) or the bracket (21).

5. The charger according to any one of claims 2 to 4,
wherein a ball spring (27) is disposed on the bracket (21), and
at least one of grooves (47) is formed on the guide rail (40) to hold the ball spring (27).

6. The charger according to any one of claims 1 to 5,
wherein the pully (22) comprises
an upper pulley (22A) rotatably disposed on the bracket (21); and
a lower pulley (22B) rotatably disposed on the bracket (21) and having a lower height than a height of the upper pulley(22A).

7. The charger according to claims 6,
wherein an outer diameter of the upper pulley (22) is smaller than an outer diameter of the lower pulley (22).

8. The charger according to any one of claims 1 to 7,
wherein a recessed portion accommodating a portion of the charging cable (2) is formed on an outer circumferential surface of the pulley (22),
a curvature of the outer surface of the charging cable (2) and a curvature of the recess portion are the same.

9. The charger according to any one claims 1 to 8,
wherein the damper (30) comprises a gas spring,
wherein the gas spring comprises
a piston rod (32) provided with a rod mount (34) on one end of which the bracket (21) is mounted; and
a body (31) accommodating a gas and in which the piston rod (32) is raised or lowered.

10. The charger according to claim 9,
wherein the body (31) comprises a body mounter (33) mounted on one of the main body (1) and the cable cover (10).

11. The charger according to claim 9,
wherein the gas spring comprises a ball spring disposed on any one of the piston rod and the body,
wherein at least one grooves is formed in the other of the piston rod and the body to hold the ball spring.

12. The charger according to any one of claims 1 to 8,
wherein the damper (30) comprises an upper gas spring provided with a rod mount(34) to which the bracket(21) is mounted at a lower end of the rod mount(34).

13. The charger according to any one of claims 1 to 8,
wherein the damper (30) comprises a lower gas spring provided with a rod mount(34) to which the bracket(21) is mounted at an upper end of the rod mount(34).

14. The charger according to any one of claims 1 to 8,
wherein the damper (30) comprises a damping spring(44) connected to the gasket(21).

15. The charger according to any one of claims 1 to 14 further comprising;
an arm body (6) disposed on an upper portion of the main body(1) and having an arm space(S1) formed therein, and
an arm rail (7) through which the charging cable(2) is guided,
wherein the arm rail (7) is formed on the arm body(6).

## Amended claims

### Amended claims in accordance with Rule 137(2) EPC.

1. A charger comprising:
a cable cover (10) disposed on a main body (1) to which a charging cable (2) is connected and having an inner space (S2) therein;
a cable guide (20) movably accommodated in the inner space (S2) and comprising a bracket (21) and at least one pulley (22) rotatably installed on the bracket (21); and
a damper (30) connected to the bracket (21),
wherein a guide rail (40) for guiding elevation of the cable guide (20) is disposed on the main body (1) or the cable cover (10),
wherein the pulley (22) comprises
an upper pulley (22A) rotatably disposed on the bracket (21); and
a lower pulley (22B) rotatably disposed on the bracket (21) and having a lower height than a height of the upper pulley (22A),
wherein the charging cable (2) comprises a guide portion (2h) guided to the upper pulley (22A) and the lower pulley (22B),
wherein the guide portion (2h) is a portion disposed between the upper pulley (22A) and the lower pulley (22B) of the charging cable (2).

2. The charger according to claim 1,
wherein a stopper (42) is provided on the guide rail (40) and the bracket (21) is caught on the stopper (42).

3. The charger according to claim 1 or 2,
wherein a damping spring (44) is provided on at least one of the guide rail (40) or the bracket (21).

4. The charger according to any one of claims 1 to 3,
wherein a ball spring (27) is disposed on the bracket (21), and
at least one of grooves (47) is formed on the guide rail (40) to hold the ball spring (27).

5. The charger according to any one of claims 1 to 4,
wherein an outer diameter of the upper pulley (22) is smaller than an outer diameter of the lower pulley (22).

6. The charger according to any one of claims 1 to 5,
wherein a recessed portion accommodating a portion of the charging cable (2) is formed on an outer circumferential surface of the pulley (22),
a curvature of the outer surface of the charging cable (2) and a curvature of the recess portion are the same.

7. The charger according to any one claims 1 to 6,
wherein the damper (30) comprises a gas spring,
wherein the gas spring comprises
a piston rod (32) provided with a rod mount (34) on one end of which the bracket (21) is mounted; and
a body (31) accommodating a gas and in which the piston rod (32) is raised or lowered.

8. The charger according to claim 7,
wherein the body (31) comprises a body mounter (33) mounted on one of the main body (1) and the cable cover (10).

9. The charger according to claim 7,
wherein the gas spring comprises a ball spring disposed on any one of the piston rod and the body, wherein at least one grooves is formed in the other of the piston rod and the body to hold the ball spring.

10. The charger according to any one of claims 1 to 6,
wherein the damper (30) comprises an upper gas spring provided with a rod mount (34) to which the bracket (21) is mounted at a lower end of the rod mount (34).

11. The charger according to any one of claims 1 to 6,
wherein the damper (30) comprises a lower gas spring provided with a rod mount (34) to which the bracket (21) is mounted at an upper end of the rod mount (34).

12. The charger according to any one of claims 1 to 6,
wherein the damper (30) comprises a damping spring (44) connected to the gasket (21).

13. The charger according to any one of claims 1 to 12 further comprising:
an arm body (6) disposed on an upper portion of the main body (1) and having an arm space (S 1) formed therein, and
an arm rail (7) through which the charging cable (2) is guided,
wherein the arm rail (7) is formed on the arm body (6).
